# EUROPEAN PATENT SPECIFICATION

(11) **EP 4 309 022 B1**
(45) Date of publication and mention of the grant of the patent: **27.08.2025**
(21) Application number: 21716926.7
(22) Date of filing: 15.03.2021
(51) Int. Cl.: G06F 3/01, H04W 4/00, G08C 17/02, G06F 3/0346, G01S 5/02, H04W 4/02, H04W 4/80

(54) **DEVICES FOR GESTURE DETECTION THAT INCORPORATE ULTRA-WIDEBAND (UWB) TRANSCEIVERS**
VORRICHTUNGEN ZUR GESTENERKENNUNG MIT ULTRABREITBAND-SENDERN/EMPFÄNGERN
DISPOSITIFS DE DÉTECTION DE GESTE INCORPORANT DES ÉMETTEURS-RÉCEPTEURS À BANDE ULTRALARGE (UWB)

(43) Date of publication of application: 24.01.2024
(73) Proprietor: Google LLC, Mountain View, CA 94043 (US)
(72) Inventor: WANG, Jian, Mountain View, CA 94043 (US); FELDMAN, Arnold, Mountain View, CA 94043 (US)
(74) Representative: Derry, Paul Stefan
(86) International application number: PCT/US2021/022363
(87) International publication number: WO 2022/197282

(56) References cited:
- EP-A1- 3 007 030
- EP-A1- 3 901 736
- CN-A- 111 610 923
- US-A1- 2005 225 453
- US-A1- 2020 106 877
- US-A1- 2020 404 077
- US-A1- 2021 074 014

## Description

### BACKGROUND

Computing devices (e.g., mobile phones, tablets, and other portable computing devices) are more or less ubiquitous today. Such computing devices may be used to communicate (e.g., using telephone functionality, email functionality, text messaging functionality, or social media functionality), to entertain (e.g., using video or audio streaming services or games), to travel (e.g., using mapping and navigation functionality), etc.

In some cases, such computing devices may be configured to communicate with other devices (e.g., over the public Internet via IEEE 802.11 standards (WIFI), over telecommunications channels, or using short range communications techniques such as BLUETOOTH^{®}). By communicating with other devices, such computing devices may provide instructions, commands, or data to the other devices. For example, a mobile phone may communicate a user command to another device. In some traditional applications, though, such techniques of communication between the mobile phone and other computing devices may be slow, cumbersome, computationally inefficient, or prone to errors.

CN111610923 discloses a directional operation method applied to an operation implementation device. The method comprises the following steps: obtaining an operation pointing to a target operation device; determining an operation direction, and determining a target operation device matched with the operation direction; and performing an operation on the determined target operation device. The target operation device is determined through the operation with the direction so as to implement the operation on the target operation device.

### SUMMARY

This disclosure relates to devices for gesture detection that incorporate ultra-wideband (UWB) transceivers. Example embodiments described herein may include a computing device (e.g., a mobile phone) that can be used to control another device (e.g., a television, a speaker, one or more components of an automobile, etc.). The computing device may include a UWB transceiver that can communicate with a UWB transceiver of the controlled device. Based on this communication, the orientation and/or position of the computing device relative to the controlled device can be determined over time. Then, based on this determined orientation and/or position, the computing device may determine if a gesture has been traced out by the computing device (e.g., a swipe, a shake, a rotation, etc.). If a gesture has been traced out by the computing device, the computing device may transmit a command to the controlled device (e.g., to change a channel, to adjust a volume, to unlock a door or a trunk, etc.). This command may be transmitted from the computing device to the controlled device over a UWB channel or using another communication medium (e.g., BLUETOOTH^{®}).

In one aspect, a device as recited in claim 1 is provided.

In another aspect, a method as recited in claim 15 is provided.

Also disclosed, but not claimed as such, is a system that includes a means-for transmitting, by a first ultra-wideband (UWB) transceiver of a device, a first UWB signal. The system also includes a means-for receiving, by the first UWB transceiver, a second UWB signal. The second UWB signal was transmitted by a second UWB transceiver. The second UWB transceiver corresponds to a first controlled device. The second UWB signal is indicative of an orientation and a position of the first UWB transceiver relative to the second UWB transceiver. Additionally, the system includes a means-for receiving, by a processor of the device executing instructions stored in a memory of the device, the second UWB signal from the first UWB transceiver. Further, the system includes a means-for determining, by the processor executing the instructions stored in the memory of the device based on the second UWB signal, changes in the orientation or the position of the first UWB transceiver relative to the second UWB transceiver. In addition, the system includes a means-for identifying, by the processor executing the instructions stored in the memory of the device, based on the determined changes in the orientation or the position of the first UWB transceiver relative to the second UWB transceiver, one or more gestures traced out by the device. Still further, the system includes a means-for transmitting, by the first UWB transceiver, a command UWB signal to the second UWB transceiver based on the one or more identified gestures. The command UWB signal provides an instruction to the first controlled device.

These as well as other aspects, advantages, and alternatives will become apparent to those of ordinary skill in the art by reading the following detailed description, with reference, where appropriate, to the accompanying drawings.

### BRIEF DESCRIPTION OF THE DRAWINGS

Figure 1 illustrates a computing device, according to example embodiments.
Figure 2 illustrates a computing system, according to example embodiments.
Figure 3 is an illustration of a system, according to example embodiments.
Figure 4A is an illustration of a gesture, according to example embodiments.
Figure 4B is an illustration of a gesture, according to example embodiments.
Figure 4C is an illustration of a gesture, according to example embodiments.
Figure 4D is an illustration of a gesture, according to example embodiments.
Figure 5 is a communication flow diagram of a communication protocol, according to example embodiments.
Figure 6A is an illustration of a system, according to example embodiments.
Figure 6B is an illustration of a disambiguation technique, according to example embodiments.
Figure 7A is an illustration of a UWB transceiver, according to example embodiments.
Figure 7B is an illustration of a UWB transceiver, according to example embodiments.
Figure 7C is an illustration of a UWB transceiver, according to example embodiments.
Figure 7D is an illustration of a UWB transceiver, according to example embodiments.
Figure 7E is an illustration of a UWB transceiver, according to example embodiments.
Figure 7F is an illustration of a UWB transceiver, according to example embodiments.
Figure 8 is an illustration of a system, according to example embodiments.
Figure 9 is a flowchart illustration of a method, according to example embodiments.

### DETAILED DESCRIPTION

Example methods and systems are contemplated herein. Any example embodiment or feature described herein is not necessarily to be construed as preferred or advantageous over other embodiments or features. The example embodiments described herein are not meant to be limiting. It will be readily understood that certain aspects of the disclosed systems and methods can be arranged and combined in a wide variety of different configurations, all of which are contemplated herein.

Furthermore, the particular arrangements shown in the figures should not be viewed as limiting. It should be understood that other embodiments might include more or less of each element shown in a given figure. Further, some of the illustrated elements may be combined or omitted. Yet further, an example embodiment may include elements that are not illustrated in the figures.

### I. Overview

Described herein are techniques that can be used by a computing device (e.g., a mobile phone, a tablet, a smartwatch, a smart wristband, etc.) to transmit one or more commands to a device that is to be controlled by the computing device. For example, the controlled device may be a television, a speaker, one or more components of an automobile, a smart home hub, a smart light fixture, a camera, a microphone, a smart appliance, a smart lock, etc. The commands transmitted by the computing device to the controlled device may be based on one or more gestures identified by the computing device. Such identified gestures may have been traced out by the computing device (e.g., by a user of the computing device moving the computing device according to a predefined pattern through the air). In some embodiments, the commands may include instructions to modify a volume of the controlled device, power on/off the controlled device, change a channel/station of the controlled device, lock/unlock the controlled device, and/or modify settings of the controlled device (e.g., brightness, contrast, equalization, etc.).

Identifying the gestures by the computing device involves communication between the computing device and the controlled device. Such communication may be initiated by a selection of a specific application, by engaging a specific button within an application on the computing device using a user interface (e.g., a user selecting a gesture-enable button on a streaming service application on a mobile phone), or by enabling a particular feature in a settings menu of the computing device. As described herein, the computing device includes a first UWB transceiver. The first UWB transceiver communicates with a second UWB transceiver of the controlled device. Communicating with the second UWB transceiver includes the first UWB transceiver transmitting a first UWB signal to the second transceiver. Upon receiving the first UWB signal, the controlled device (e.g., a controller of the second UWB transceiver or a processor connected to the second UWB transceiver) may determine an orientation of the first UWB transceiver relative to the second UWB transceiver. Additionally or alternatively, upon receiving the first UWB signal, the controlled device (e.g., a controller of the second UWB transceiver or a processor connected to the second UWB transceiver) may determine a distance (i.e., a range) separating the first UWB transceiver from the second UWB transceiver.

Upon the controlled device determining the orientation and/or the position of the first UWB transceiver relative to the second UWB transceiver, the orientation and/or the position of the first UWB transceiver relative to the second UWB transceiver may then be communicated back to the computing device. For example, the second UWB transceiver may transmit a second UWB signal to the first UWB transceiver, where the second UWB signal contains information indicative of an orientation and a position of the first UWB transceiver relative to the second UWB transceiver. In alternative embodiments, the second UWB transceiver of the controlled device may instead respond to receiving the first UWB signal with a second UWB signal that includes raw data (e.g., data regarding arrival times of the first UWB signal at different antennas within the second UWB transceiver), rather than processed data. This raw data may then be processed by the computing device (e.g., by a controller of the first UWB transceiver or a processor of the computing device) to determine the orientation and/or position of the first UWB transceiver relative to the second UWB transceiver. As such, the raw data contained in the second UWB signal may nonetheless still be indicative of an orientation and a position of the first UWB transceiver relative to the second UWB transceiver.

The computing device transmits a series of UWB signals and receives a corresponding series of UWB signals indicative of the position and orientation of the first UWB transceiver relative to the second UWB transceiver. Each of the transmitted and/or received UWB signals may include an associated timestamp, for example. Using the series of received UWB signals, the computing device (e.g., a processor executing instructions stored in a memory of the computing device) determines changes in the orientation or the position of the first UWB transceiver relative to the second UWB transceiver over time (e.g., based on the timestamps). Based on these determined changes, the computing device identifies one or more gestures traced out by the first UWB transceiver (and, similarly, by the computing device itself). For example, the computing device may trace out a swipe gesture in the air and, correspondingly, the series of transmitted and received UWB signals may indicate a change in position and orientation of the first UWB transceiver relative to the second UWB transceiver that represents the swipe gesture. The one or more gestures are identified by the computing device (e.g., by a processor of the computing device) based on the received UWB signals by comparing the time-evolution of the orientation, the time-evolution of position, or the time-evolution of both orientation and position (or even the raw set of received UWB signals, themselves) to a set of predefined gestures stored within a repository in a memory of the computing device. The predefined gestures may be based on sample gestures previously performed on the computing device by a user (e.g., the user presently using the computing device or by a different user), sample gestures previously performed on a similar computing device by a user (e.g., the user presently using the computing device or a different user), or a machine-learned model that was trained using labelled training data corresponding to UWB signals and/or video footage of users tracing out gestures.

Each gesture may have a corresponding desired action for the controlled device. For example, if the controlled device is a television, a swipe up may correspond to a volume increase, a swipe down may correspond to a volume decrease, a shake may correspond to a toggle in a mute setting, a swipe to the right may correspond to a decrease in channel, a swipe to the left may correspond to a increase in channel, a rotation clockwise (e.g., from the perspective of a user) may correspond to a power on, a rotation counterclockwise (e.g., from the perspective of a user) may correspond to a power off, a series of gestured numbers may correspond to a change in channel to a specific channel number, etc. Such corresponding desired actions may be stored within the repository of the predefined gestures in the memory of the computing device or within a related repository in the memory of the computing device that is mapped to the repository of gestures. The computing device may retrieve the corresponding desired action(s) based on the identified gesture.

Based upon the corresponding desired action(s), the computing device transmits command(s) to the controlled device to take desired action(s). For example, the computing device may transmit a command UWB signal from the first UWB transceiver to the second UWB transceiver that indicates to the controlled device to take the desired action(s). In some embodiments that are not claimed, the command may be transmitted from the computing device to the controlled device using communication channels other than UWB. For example, the computing device may transmit the desired action(s) to the controlled device using BLUETOOTH^{®}, WIFI, infrared signals, etc.

In some embodiments, rather than the computing device transmitting one or more desired command(s) to the controlled device (e.g., using one or more command UWB signals), the computing device may instead transmit one or more identified gestures to the controlled device (e.g., using or more gesture UWB signals). Based on the one or more identified gestures, the controlled device, itself, may determine what action(s), if any, to take. For example, the controlled device may include a memory having a repository stored therein that translates received gestures into actions taken by the controlled device. If the controlled device is a speaker, for instance, the speaker may include a repository that indicates that swipe gestures (e.g., rotations of the computing device about a yaw axis) correspond to a desired change in channel, while rotation gestures (e.g., rotations of the computing device about a roll axis) correspond to a desired change in volume. This may reduce the amount of commands corresponding to gestures that are stored in the memory of the computing device, for example.

As described herein, UWB signals may be communicated (e.g., using UWB transceivers) between a computing device and a controlled device to determine orientation and/or position of the computing device relative to the controlled device and, ultimately, to identify whether one or more gestures have been traced out by the first UWB transceiver / the computing device. Using UWB communication rather than alternatives (e.g., light-detection and ranging (lidar) monitoring, radar monitoring, pure accelerometers, etc.) may improve the accuracy with which gestures are identified by the computing device (e.g., fewer false positive gestures compared to radar techniques resulting from body motion or environmental motion), may improve the precision with which motions of the computing device can be monitored (e.g., improved precision compared to BLUETOOTH^{®} Low Energy (BLE) techniques due to the high bandwidth of the UWB signals), and/or may reduce the energy required by the computing device to determine gestures and/or the energy required by the computing device and the controlled device to communicate gestures / commands based on those gestures (e.g., relative to other communication protocols that consume more power). UWB-based gesture detection can be used for ranges up to 20 meters within a line of sight. Additionally, UWB-based gesture detection can work through obstructions, such as walls (i.e., does not require line of sight). For these reasons, UWB-based gesture detection represents improvements on alternative gesture-recognition techniques.

In some embodiments, in addition to using transmitted UWB signals, gestures may be identified by the computing device using other techniques. For example, in some embodiments, the computing device may include an accelerometer. Data gathered from the accelerometer may supplement data received based on the UWB signal communication with the controlled device. In some embodiments, the computing device (e.g., a processor of the computing device) may use both accelerometer data and data indicative of an orientation and position of the first UWB transceiver relative to the second UWB transceiver contained within received UWB signals to determine an orientation and/or position of the computing device relative to the controlled device.

### II. Example Systems

The following description and accompanying drawings will elucidate features of various example embodiments. The embodiments provided are by way of example, and are not intended to be limiting. As such, the dimensions of the drawings are not necessarily to scale.

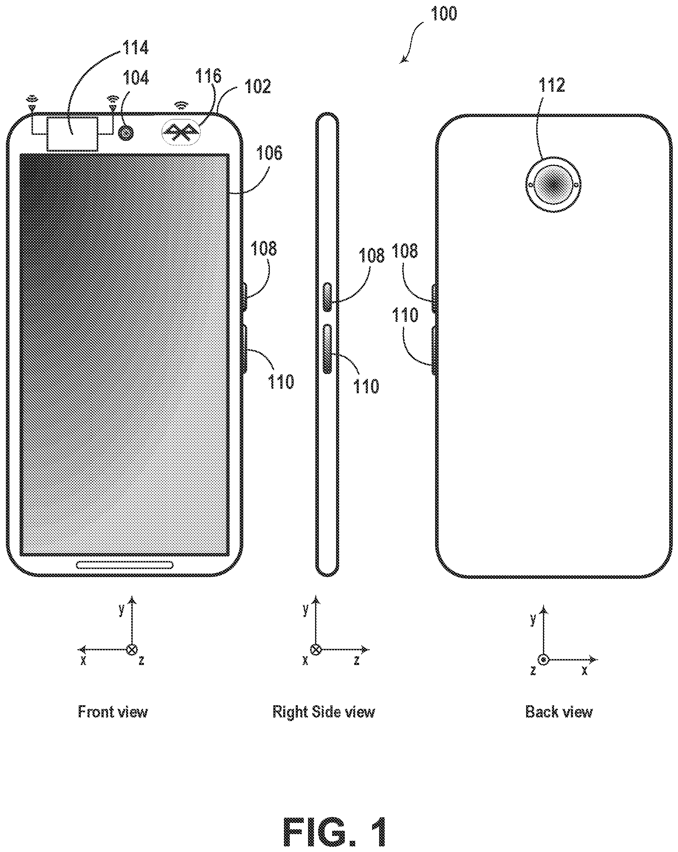

Figure 1 illustrates an example computing device 100. Computing device 100 is shown in the form factor of a mobile phone. However, computing device 100 may be alternatively implemented as a desktop computer, a laptop computer, a tablet, a wearable computing device (e.g., a watch or a wristband), or a remote control, among other possibilities. Computing device 100 may include various elements, such as body 102, display 106, buttons 108 and 110, a first UWB transceiver 114, and a first BLUETOOTH^{®} (e.g., BLE) transceiver 116. Computing device 100 may further include one or more cameras, such as front-facing camera 104 and rear-facing camera 112.

Front-facing camera 104 may be positioned on a side of body 102 typically facing a user while in operation (e.g., on the same side as display 106). Rear-facing camera 112 may be positioned on a side of body 102 opposite front-facing camera 104. Referring to the cameras as front and rear facing is arbitrary, and computing device 100 may include multiple cameras positioned on various sides of body 102.

Display 106 could represent a cathode ray tube (CRT) display, a light emitting diode (LED) display, a liquid crystal (LCD) display, a plasma display, an organic light emitting diode (OLED) display, or any other type of display known in the art. In some examples, display 106 may serve as a viewfinder for front-facing camera 104 and/or rear-facing camera 112. Display 106 may also support touchscreen functions that allow for interaction with aspects of computing device 100.

The first UWB transceiver 114 may be usable by the computing device 100 to communicate with one or more other devices (e.g., based on one or more processes performed by a processor of the computing device 100). In some embodiments, the first UWB transceiver 114 may be internal to the computing device 100 (e.g., not visible from the exterior of the computing device 100 illustrated in Figure 1). The first UWB transceiver 114 may include one or more antennas configured to radiate electromagnetic waves. In some embodiments, the electromagnetic waves radiated by the first UWB transceiver 114 may be within the radio portion of the electromagnetic spectrum. Further, the electromagnetic waves radiated by the first UWB transceiver 114 may have a relatively large bandwidth (e.g., between 475 MHz and 525 MHz). In some embodiments, the bandwidth of the electromagnetic waves radiated by the first UWB transceiver 114 may meet the definition of UWB provided by the Federal Communications Commission (FCC) (e.g., the bandwidth exceeds the lesser of 500 MHz or 20% of the arithmetic center frequency). Alternatively, in some embodiments, the bandwidth of the electromagnetic waves radiated by the first UWB transceiver 114 may be less than 500 MHz and less than 20% of the arithmetic center frequency (i.e., the electromagnetic waves transmitted by the first UWB transceiver 114 may not exactly meet the FCC's definition of UWB). The first UWB transceiver 114 may allow for communication with other UWB transceivers at close range and use only small amounts of energy to do so. As such, communicating using the first UWB transceiver 114 may conserve battery life for the computing device 100 relative to communicating using other techniques.

In addition to transmitting and receiving data to other devices, the first UWB transceiver 114 may be used to determine an orientation and a position of the first UWB transceiver 114 relative to other UWB transceivers with which it communicates, as described herein. Such orientation and position information may be used by the computing device 100 to identify a gesture traced out by the first UWB transceiver 114 and/or the computing device 100. Such identified gestures may be used to provide instructions to the computing device 100 and/or may be used by the computing device 100 to determine commands or other communications to transmit to other devices (e.g., using the first UWB transceiver 114 or another communication technique).

The first BLE transceiver 116 may be used by the computing device 100 to communicate with other BLUETOOTH^{®}-enabled devices over BLUETOOTH^{®} frequencies (e.g., between 2.402 and 2.480 GHz) at relatively short distances (e.g., up to 100 m). Such BLUETOOTH^{®} communication may occur according to the IEEE 802.15.1 standard, for example. In some embodiments, the first BLE transceiver 116 may be internal to the computing device 100 (e.g., not visible from the exterior of the computing device 100 illustrated in Figure 1). In some embodiments, the first BLE transceiver 116 may be used to broadcast a discovery signal in order to discover other BLUETOOTH^{®}-enabled devices in a vicinity of the computing device 100. Other BLUETOOTH^{®}-enabled devices may respond to the discovery signal (e.g., transmit a response signal that includes identification information or information about a communication protocol) to establish a connection with the computing device 100 such that the computing device 100. While the first BLE transceiver 116 is described herein as a BLUETOOTH^{®} Low Energy transceiver, it is understood that other types of BLUETOOTH^{®} transceivers or other short-range communications modules could be used instead of or in addition to a BLUETOOTH^{®} Low Energy transceiver.

While not illustrated in Figure 1, it is understood that the computing device 100 may also include an inertial measurement unit (IMU). The IMU may be internal to the computing device 100 (e.g., not visible from the exterior of the computing device 100 illustrated in Figure 1). The IMU may be configured to determine an orientation and/or direction of motion of the computing device 100 (e.g., relative to a gravitational field of the Earth) and provide information relative to the orientation and/or direction of motion of the computing device 100 to a processor of the computing device 100. In order to determine the orientation and/or direction of motion of the computing device 100, the IMU may include one or more accelerometers, one or more gyroscopes, and/or one or more magnetometers. Such devices may convert physical forces (e.g., gravity or other outside forces applied to the computing device 100, such as by a user) into electric signals, for example, that can be interpreted by a processor of the computing device 100. A processor of the computing device may use the electric signals from the IMU over time to determine absolute position and/or angular orientation of the computing device 100 (e.g., using dead reckoning). As described herein, in some embodiments, determinations made by the IMU about the angular orientation and/or position of the computing device 100 may be used in addition to communications between the first UWB transceiver 114 and other UWB transceivers to determine an angular orientation and/or position of the computing device 100 over time.

Computing device 100 may also include an ambient light sensor that may continuously or from time to time determine the ambient brightness of an environment in which computing device 100 is present. In some implementations, the ambient light sensor can be used to adjust the display brightness of display 106. Additionally, the ambient light sensor may be used to determine an exposure length of one or more of cameras 104 or 112, or to help in this determination.

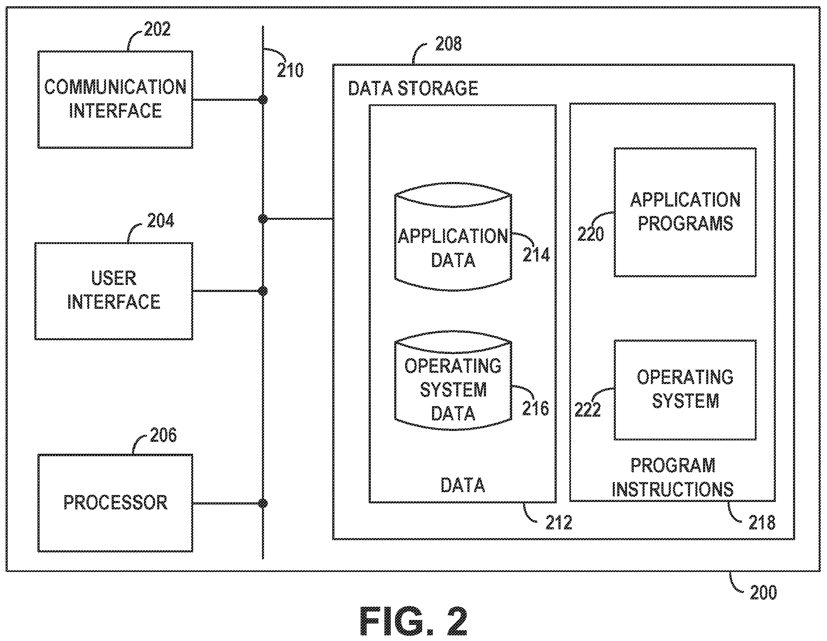

Figure 2 is a simplified block diagram showing some of the components of an example computing system 200. By way of example and without limitation, computing system 200 may be a cellular mobile telephone (e.g., a smartphone), a computer (such as a desktop, notebook, tablet, or handheld computer), a home automation component, a digital video recorder (DVR), a digital television, a remote control, a wearable computing device (e.g., a smartwatch or a smart wristband), a gaming console, a robotic device, a vehicle, or some other type of device. Computing system 200 may represent, for example, aspects of computing device 100. As shown in Figure 2, computing system 200 may include communication interface 202, user interface 204, processor 206, and data storage 208, all of which may be communicatively linked together by a system bus, network, or other connection mechanism 210.

Communication interface 202 may allow computing system 200 to communicate, using analog or digital modulation, with other devices, access networks, and/or transport networks. Thus, communication interface 202 may facilitate circuit-switched and/or packet-switched communication, such as plain old telephone service (POTS) communication and/or Internet protocol (IP) or other packetized communication. For instance, communication interface 202 may include a chipset and antenna arranged for wireless communication with a radio access network or an access point. Also, communication interface 202 may take the form of or include a wireline interface, such as an Ethernet, Universal Serial Bus (USB), or High-Definition Multimedia Interface (HDMI) port. Communication interface 202 may also take the form of or include a wireless interface, such as a WIFI, BLUETOOTH^{®}, global positioning system (GPS), or wide-area wireless interface (e.g., WiMAX, 3GPP Long-Term Evolution (LTE), and/or 3GPP 5G). However, other forms of physical layer interfaces and other types of standard or proprietary communication protocols may be used over communication interface 202. Furthermore, communication interface 202 may include multiple physical communication interfaces (e.g., a WIFI interface; a BLUETOOTH^{®} interface, such as the first BLE transceiver 116 shown and described with reference to Figure 1; and a wide-area wireless interface). In some embodiments, the communication interface 202 may include the first UWB transceiver 114 shown and described with reference to Figure 1.

User interface 204 may function to allow computing system 200 to interact with a human or non-human user, such as to receive input from a user and to provide output to the user. Thus, user interface 204 may include input components such as a keypad, keyboard, touch-sensitive panel, computer mouse, trackball, joystick, microphone, and so on. User interface 204 may also include one or more output components such as a display screen which, for example, may be combined with a touch-sensitive panel. The display screen may be based on CRT, LCD, and/or LED technologies, or other technologies now known or later developed. User interface 204 may also be configured to generate audible output(s), via a speaker, speaker jack, audio output port, audio output device, earphones, and/or other similar devices. User interface 204 may also be configured to receive and/or capture audible utterance(s), noise(s), and/or signal(s) by way of a microphone and/or other similar devices.

In some examples, user interface 204 may include a display that serves as a viewfinder for still camera and/or video camera functions supported by computing system 200. Additionally, user interface 204 may include one or more buttons, switches, knobs, and/or dials that facilitate the configuration and focusing of a camera function and the capturing of images. It may be possible that some or all of these buttons, switches, knobs, and/or dials are implemented by way of a touch-sensitive panel.

Processor 206 may include one or more general purpose processors (e.g., microprocessors) and/or one or more special-purpose processors (e.g., digital signal processors (DSPs), graphics processing units (GPUs), floating point units (FPUs), network processors, or application-specific integrated circuits (ASICs)). In some instances, special-purpose processors may be capable of image processing and/or execution of machine-learning models, among other possibilities. Data storage 208 may include one or more volatile and/or non-volatile memories, such as magnetic, optical, flash, or organic storage, and may be integrated, in whole or in part, with processor 206. Data storage 208 may include removable and/or non-removable components.

Processor 206 may be capable of executing program instructions 218 (e.g., compiled or non-compiled program logic and/or machine code) stored in data storage 208 to carry out the various functions described herein. Therefore, data storage 208 may include a non-transitory computer-readable medium, having stored thereon program instructions that, upon execution by computing system 200, cause computing system 200 to carry out any of the methods, processes, or operations disclosed in this specification and/or the accompanying drawings. The execution of program instructions 218 by processor 206 may result in processor 206 using data 212.

By way of example, program instructions 218 may include an operating system 222 (e.g., an operating system kernel, device driver(s), and/or other modules) and one or more application programs 220 (e.g., camera functions, address book, email, web browsing, social networking, audio-to-text functions, text translation functions, and/or gaming applications) installed on computing system 200. Similarly, data 212 may include operating system data 216 and application data 214. Operating system data 216 may be accessible primarily to operating system 222, and application data 214 may be accessible primarily to one or more of application programs 220. Application data 214 may be arranged in a file system that is visible to or hidden from a user of computing system 200.

Application programs 220 may communicate with operating system 222 through one or more application programming interfaces (APIs). These APIs may facilitate, for instance, application programs 220 reading and/or writing application data 214, transmitting or receiving information via communication interface 202, receiving and/or displaying information on user interface 204, and so on.

In some cases, application programs 220 may be referred to as "apps" for short. Additionally, application programs 220 may be downloadable to computing system 200 through one or more online application stores or application markets. However, application programs can also be installed on computing system 200 in other ways, such as via a web browser or through a physical interface (e.g., a USB port) on computing system 200.

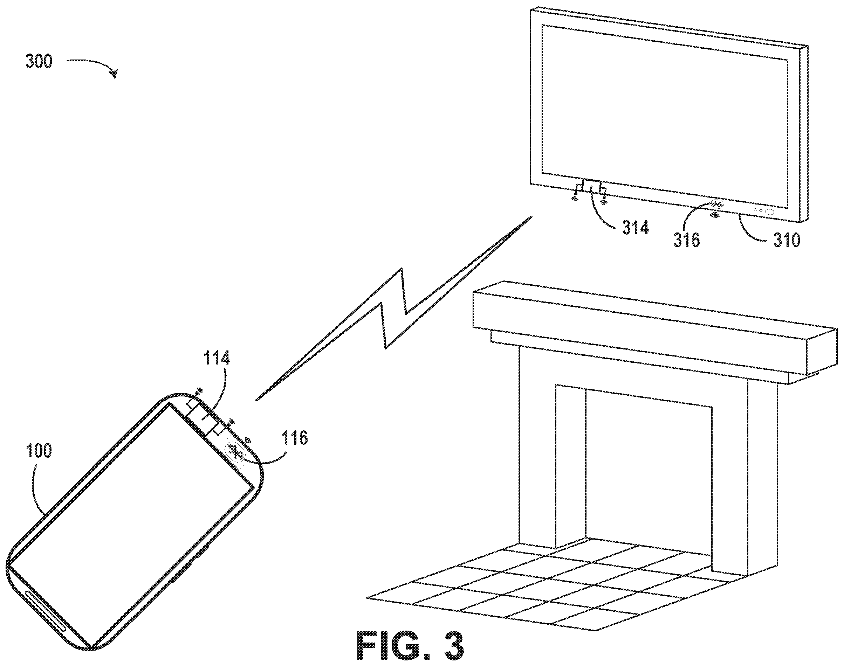

Figure 3 is an illustration of a system 300, according to example embodiments. The system 300 includes computing device 100 as shown and described with reference to Figure 1 and a controlled device 310. As illustrated in Figure 3, the computing device 100 may be a mobile phone. It is understood, however, that other embodiments of the computing device 100 are also possible and contemplated herein (e.g., a watch, a wristband, a tablet, a remote control, etc.). Similarly, as illustrated in Figure 3, the controlled device 310 may be a television. Likewise, though, it is understood that other embodiments of the controlled device 310 are also possible and contemplated herein (e.g., a speaker, a thermostat, a smart-home hub, a desktop computer, a tablet, a kitchen appliance, a washer, a dryer, etc.).

As illustrated, the computing device 100 may include a first UWB transceiver 114 and a first BLE transceiver 116. Similarly, the controlled device 310 may include a second UWB transceiver 314 and a second BLE transceiver 316. The first UWB transceiver 114 may be configured to transmit and receive UWB signals using one or more antennas. Such UWB signals may correspond to electromagnetic waves in the radio spectrum (e.g., between 1 GHz and 10 GHz) having a relatively broad bandwidth (e.g., between 475 MHz and 525 MHz). Similarly, the first BLE transceiver 116 may be configured to transmit and receive BLUETOOTH^{®} signals. Such BLUETOOTH^{®} signals may correspond to ultra high frequency (UHF) radio waves having frequencies between 2.402 GHz and 2.480 GHz (e.g., and a lower bandwidth than the UWB signals communicated by the first UWB transceiver 114 and the second UWB transceiver 314).

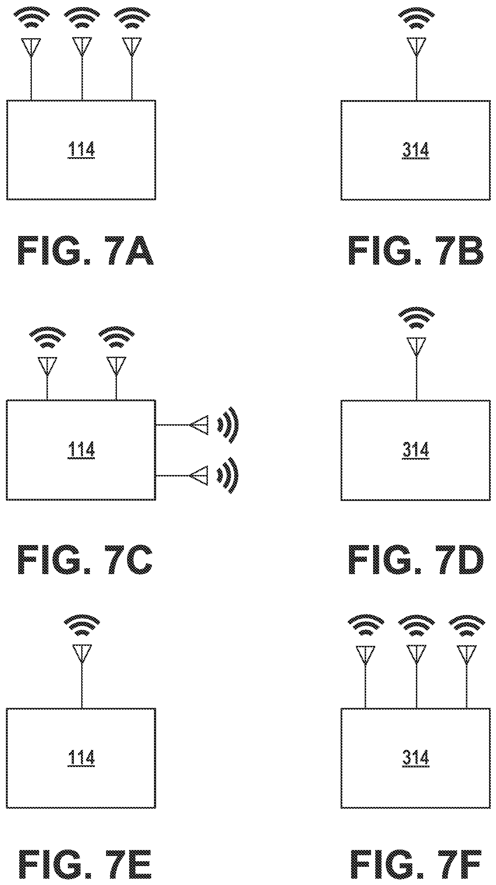

In some embodiments, the first UWB transceiver 114 may be configured similarly or identically to the second UWB transceiver 314. For example both the first UWB transceiver 114 and the second UWB transceiver 314 may be capable of transmitting and receiving UWB signals. Additionally, the first UWB transceiver 114 and the second UWB transceiver 314 may transmit UWB signals that have the same bandwidth. Further, the first UWB transceiver 114 and the second UWB transceiver 314 may both include the same number of antennas. In other embodiments, though, the first UWB transceiver 114 and the second UWB transceiver 314 may be different in one or more ways (e.g., different numbers of antennas, as shown and described with reference to Figures 7A-7F). Similarly, the first BLE transceiver 116 and the second BLE transceiver 316 may be configured similarly or identically to one another. For example, the first BLE transceiver 116 and the second BLE transceiver 316 may both be configured to both transmit and receive BLUETOOTH^{®} signals. In some embodiments, though, the first BLE transceiver 116 and the second BLE transceiver 316 may have different components and/or capabilities. For example, the range of the first BLE transceiver 116 may be longer than the second BLE transceiver 316 or the first BLE transceiver 116 may be capable of broadcasting BLUETOOTH^{®} discovery signals, while the second BLE transceiver 316 is only capable of responding to discovery signals.

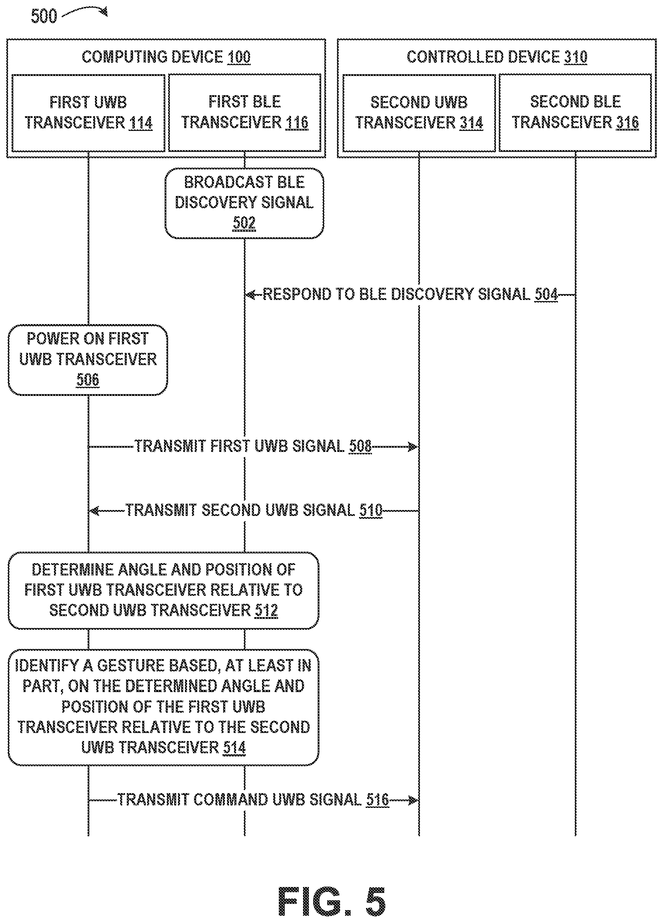

As described above, the first BLE transceiver 116 may be configured to transmit a BLUETOOTH^{®} discovery signal. The BLUETOOTH^{®} discovery signal may be used by the computing device 100 to discover other BLUETOOTH^{®}-enabled devices in the vicinity of the computing device 100. One or more nearby BLUETOOTH^{®}-enabled devices, such as the controlled device 310 using the second BLE transceiver 316, may respond to a BLUETOOTH^{®} discovery signal transmitted by the first BLE transceiver 116 to indicate the ability to connect (e.g., to connect for BLUETOOTH^{®} communication or other communication). For example, in the system 300 in Figure 3, the first BLE transceiver 116 may transmit a BLUETOOTH^{®} discovery signal that is received by the second BLE transceiver 316. In response to the BLUETOOTH^{®} discovery signal, the second BLE transceiver 316 may transmit a response signal to the first BLE transceiver 116 to indicate to the computing device that the controlled device 310 is available to be controlled. Thereafter, the first UWB transceiver 114 and the second UWB transceiver 314 may communicate with one another to determine an orientation and/or position of the first UWB transceiver 114 relative to the second UWB transceiver 314. This communication protocol is shown and described with reference to Figure 5.

While BLUETOOTH^{®} communication using the first BLE transceiver 116 and the second BLE transceiver 316 may enable efficient discovery (i.e., lower power consumption discovery) of nearby devices to be controlled, it is understood that such a discovery process is not required. In some embodiments, the first UWB transceiver 114 may begin transmitting UWB signals to the controlled device 310 without first initiating contact using BLUETOOTH (i.e., lower power consumption) signals. As such, in some embodiments, the computing device 100 may not include the first BLE transceiver 116 and/or the controlled device 310 may not include the second BLE transceiver 316.

Regardless how the communication between the computing device 100 and the controlled device 310 is initiated, the first UWB transceiver 114 may communicate with the second UWB transceiver 314 to determine an orientation and/or position of the first UWB transceiver 114 relative to the second UWB transceiver 314. For example, the first UWB transceiver 114 may transmit a first UWB signal to the second UWB transceiver 314. Then, in response, the second UWB transceiver 314 may respond with a second UWB signal. The second UWB signal may be indicative of the orientation and/or position of the first UWB transceiver 114 relative to the second UWB transceiver 314.

For example, the second UWB signal may have an associated transmission timestamp (e.g., an indication of when the second UWB transceiver 314 transmitted the second UWB signal), which can be compared to a reception timestamp (e.g., an indication of when the first UWB transceiver 114 received the second UWB signal) to determine transit time. In some examples, the transmission timestamp and/or the reception timestamp may be accurate to within 1 ns or less due to the bandwidth (e.g., between 475 MHz and 525 MHz) used to communicate the second UWB signal. Using the speed of light along with the transit time (i.e., reception timestamp minus transmission timestamp), the distance between the first UWB transceiver 114 and the second UWB transceiver 314 can be determined (e.g., to an accuracy of between 5 cm and 50 cm). In other embodiments, the controlled device 310 (e.g., a processor of the controlled device 310) may instead compare a transmission timestamp to a reception timestamp of a first UWB signal (e.g., a signal sent by the first UWB transceiver 114 and received by the second UWB transceiver 314), rather than the second UWB signal sent by the second UWB transceiver 314 and received by the first UWB transceiver 114. In this way, the controlled device 310 may determine a separation (i.e., range) between the computing device 100 and the controlled device 310. This separation may then be transmitted (e.g., as a range value encoded as a series of bits) by the second UWB transceiver 314 to the first UWB transceiver 114.

The second UWB signal may also be usable to determine an orientation of the first UWB transceiver 114 relative to the second UWB transceiver 314 (e.g., to within an accuracy of 5°). For example, if the first UWB transceiver includes two antennas (e.g., separated by half of the center wavelength of the second UWB signal or less), the difference in arrival time between when a first antenna receives the second UWB signal and when a second antenna receives the second UWB signal, along with a predetermined separation between the antennas (e.g., based on manufacturing specifications of the first UWB transceiver 114) and the speed of light, can be used to trigonometrically determine the angular position (e.g., in azimuth and/or elevation) of the second UWB transceiver 314 relative to the two antennas of the first UWB transceiver 114. Additionally, the second UWB transceiver 314 may transmit an additional UWB signal (e.g., from an additional antenna of the second UWB transceiver 314). In the case where the second UWB transceiver 314 transmits multiple response UWB signals from multiple antennas at different locations the response signals can be used to determine the orientation of the first UWB transceiver 114 relative to the second UWB transceiver 314 in multiple angular directions (e.g., in both azimuthal and elevation directions). Such a determination of the orientation of the first UWB transceiver 114 may be based on the speed of light, the predetermined separation between the antennas of the first UWB transceiver 114, and/or the predetermined separation between the antennas of the second UWB transceiver 314 from which the different response UWB signals are transmitted.

In some embodiments, a processor (e.g., the processor 206 shown and described with reference to Figure 2) of the computing device 100 may analyze the second UWB signal received by the first UWB transceiver 114 to determine the orientation and/or position of the first UWB transceiver 114 relative to the second UWB transceiver 314. Alternatively, a controller associated with the first UWB transceiver may analyze the second UWB signal to determine the orientation and/or position of the first UWB transceiver 114 relative to the second UWB transceiver 314 and then transmit (e.g., over a system bus, such as the connection mechanism 210 shown and described with reference to Figure 2) the orientation and/or position of the first UWB transceiver 114 to a processor (e.g., the processor 206 shown and described with reference to Figure 2) of the computing device 100. Regardless of how the orientation and/or position of the first UWB transceiver 114 relative to the second UWB transceiver 314 is determined, the orientation and/or position of the first UWB transceiver 114 may be stored within a memory of the computing device 100 (e.g., with an associated timestamp).

In some embodiments, upon receiving or determining the orientation and/or position of the first UWB transceiver 114 relative to the second UWB transceiver 314, a processor of the computing device 100 may perform one or more geometric transformations to determine a position of the entire computing device 100 relative to the second UWB transceiver 314 and/or relative to the entire controlled device 310. Such transformation(s) may be based on one or more three-dimensional models of the computing device 100 and/or controlled device 310 stored within a memory of the computing device 100.

Upon the computing device 100 (e.g., a processor of the computing device) determining an orientation and/or position of the first UWB transceiver 114 relative to the second UWB transceiver 314 (and/or upon determining an orientation and/or position of the computing device 100, as a whole, relative to the controlled device 310), the orientation and/or position information may be stored within a repository in a memory of the computing device 100 with an associated timestamp. For example, an entry in the repository may include a global timestamp (e.g., in ms), a range (e.g., in meters) between the first UWB transceiver 114 and the second UWB transceiver 314, an azimuthal angle (e.g., in degrees) between the first UWB transceiver 114 and the second UWB transceiver 314, and an elevation angle (e.g., in degrees) between the first UWB transceiver 114 and the second UWB transceiver 314.

By analyzing a series of entries with associated timestamps, the computing device 100 (e.g., a processor of the computing device 100) may be able to identify one or more gestures (e.g., a swipe, a rotation, etc.) traced out by the first UWB transceiver 114 / computing device 100 (e.g., by a user tracing out such gestures with the computing device 100 in-hand). For example, the processor of the computing device 100 may determine changes in orientation and/or position of the first UWB transceiver 114 relative to the second UWB transceiver 314 over time (e.g., based on the entries within the repository in the memory of the computing device 100). In some embodiments, prior to attempting to identify one or more gestures, the computing device 100 may receive an input (e.g., a user input) that indicates that gestures are to be identified / changes in orientation and/or position of the first UWB transceiver 114 are to be determined. Such an input may be a setting selected (e.g., a global setting of the computing device 100 or a setting within an application executed by the computing device 100).

The determined changes in orientation and/or position may correspond to one or more gestures. Identifying which, if any, gestures correspond to the series of entries may include the computing device 100 (e.g., a processor of the computing device 100) analyzing the determined changes in the orientation or the position of the first UWB transceiver 114 relative to the second UWB transceiver 314 using a machine-learned model that was trained using labelled training data corresponding to a plurality of predefined gestures. Additionally or alternatively, identifying which, if any, gestures correspond to the series of entries may include the computing device 100 (e.g., a processor of the computing device 100) comparing the determined changes in the orientation or the position of the first UWB transceiver114 relative to the second UWB transceiver 314 to orientation and position data of one or more stored gestures that correspond to gestures previously traced out by a user of the device (e.g., as a calibration). For example, the computing device 100 may prompt a user to perform a calibration swipe gesture and, while the user is performing the calibration swipe gesture with the computing device 100, UWB signals may be transmitted between the first UWB transceiver 114 and another UWB transceiver. Based on these UWB signals, the orientation and position of the computing device 100 during the calibration swipe gesture may be stored within a memory of the computing device 100 for later access (e.g., by a processor when attempting to identify one or more gestures).

In order to have sufficient temporal resolution to perform identification of gestures, the process of the first UWB transceiver 114 transmitting a first UWB signal and the second UWB transceiver 314 responding with a second UWB signal may be performed periodically at a predefined time interval (e.g., every 1 ms, 2 ms, 3 ms, 4 ms, 5 ms, 6 ms, 7 ms, 8 ms, 9 ms, 10 ms, 15 ms, 20 ms, 25 ms, 30 ms, 35 ms, 40 ms, 45 ms, 50 ms, 75 ms, 100 ms, 125 ms, 150 ms, 175 ms, 200 ms, 225 ms, 250 ms, 275 ms, 300 ms, 325 ms, 350 ms, 375 ms, 400 ms, 425 ms, 450 ms, 475 ms, 500 ms, etc.). The predefined time interval may be set by an application executed by the computing device 100, based on the type of controlled device 310 with which the computing device 100 is communicating, set by a user, or based on information received by the computing device 100 from the second UWB transceiver 314 or the second BLE transceiver 316, in various embodiments. Further, the orientation and/or position of the first UWB transceiver 114 and/or the computing device 100 based on the received second UWB signals may be stored in a repository of the memory of the computing device 100 with timestamps corresponding to the predefined time interval (e.g., a first orientation and first position of the first UWB transceiver 114 is stored at t₀ = 0 ms, a second orientation and second position of the first UWB transceiver 114 is stored at t₁ = 10 ms, a third orientation and third position of the first UWB transceiver 114 is stored at t₂ = 20 ms, etc.). Additionally, in some embodiments, there may be a deletion threshold, after which a determined orientation and/or position and associated timestamp are removed from the repository in the memory of the computing device 100. For example, once an entry is more than 3.0 seconds old, that entry may be deleted from the repository in the memory of the computing device 100 to free up space for additional entries. It is understood that 3.0 seconds is provided solely as an example and that other deletion thresholds are possible and contemplated herein (e.g., 0.5 seconds, 0.75 seconds, 1.0 seconds, 1.25 seconds, 1.5 seconds, 1.75 seconds, 2.0 seconds, 2.25 seconds, 2.5 seconds, 2.75 seconds, 3.25 seconds, 3.5 seconds, 3.75 seconds, 4.0 seconds, 4.25 seconds, 4.5 seconds, 4.75 seconds, 5.0 seconds, etc.).

In addition to using UWB signals communicated between the first UWB transceiver 114 and the second UWB transceiver 314 to identify one or more gestures, a computing device 100 (e.g., a processor of the computing device 100) may use data provided by one or more IMUs of the computing device 100 (e.g., one or more accelerometers of the computing device 100) configured to measure changes in orientation of the computing device 100. The data provided by the one or more IMUs may augment the received UWB signals and be used in conjunction with the received UWB signals when determining an orientation of the computing device 100 relative to the controlled device 310 and, thereby, when identifying which, if any, gestures have been traced out by the computing device 100.

However a gesture is identified (e.g., solely based on one or more received second UWB signals or based on a combination of one or more received second UWB signals and data from one or more IMUs), once a gesture has been identified, the computing device 100 may transmit one or more commands to the controlled device 310. The command(s) may provide the controlled device 310 with one or more instructions (e.g., instructions to change a channel, to adjust a volume, to power on/off, etc.). The command(s) provided by the computing device 100 may be based on the one or more identified gestures. For example, a swipe gesture may correspond to a channel change command, while a rotation gesture may correspond to a volume up or volume down command (e.g., a clockwise rotation is volume up, while a counterclockwise rotation is volume down). Additionally or alternatively, the command(s) provided by the computing device 100 may be based on the type of controlled device 310 being communicated with. A swipe gesture may correspond to one type of command for a television (e.g., a change in channel) and a different type of command for a speaker (e.g., an equalization setting).

The command(s) may be communicated from the computing device 100 to the controlled device 310 in multiple ways. For example, the computing device 100 may transmit, from the first UWB transceiver 114, one or more command UWB signals to the second UWB transceiver 314. Additionally or alternatively, the first BLE transceiver 116 may transmit one or more command BLE signals to the second BLE transceiver 316. Other techniques for communicating commands are also possible and contemplated herein (e.g., communication over a WIFI network, communication using cellular communication protocols, communication over the public Internet, infrared optical communications, etc.).

In some embodiments, rather than the computing device 100 identifying one or more gestures traced out by the first UWB transceiver 114, the controlled device 310 may identify such gestures. For example, the second UWB transceiver 314 may receive UWB signals transmitted by the first UWB transceiver 114. Such UWB signals may have associated transmission timestamps (e.g., communicated as bits incorporated within the UWB signals). Upon the second UWB transceiver 314 receiving the UWB signals (e.g., at multiple antennas), a data entry may be stored within a memory associated with the controlled device 310 (e.g., an on-board memory or an associated server memory, such as a cloud memory). The data entry may include the transmission timestamp, as well as one or more reception timestamps (e.g., one reception timestamp for each antenna of the second UWB transceiver 314). After receiving and storing a series of data entries, a processor of the controlled device 310 may analyze the series of data entries to identify one or more gestures traced out by the computing device 100.

The processor of the controlled device 310 identifying the one or more gestures may include the processor of the controlled device 310 analyzing the timestamps of the data entries to determine changes in the orientation and/or position of the first UWB transceiver 114 relative to the second UWB transceiver 314 over time. The processor of the controlled device 310 may then compare the time-evolution of the position and/or orientation of the first UWB transceiver 114 relative to the second UWB transceiver 314 to predefined gestures stored within a memory associated with the controlled device 310 to identify one or more gestures traced out by the first UWB transceiver 114 / the computing device 100. Such predefined gestures may correspond to previous gestures identified as being traced out by the computing device 100, to previous gestures identified as being traced out by computing devices other than the computing device 100, to user-defined gestures, or to default gestures.

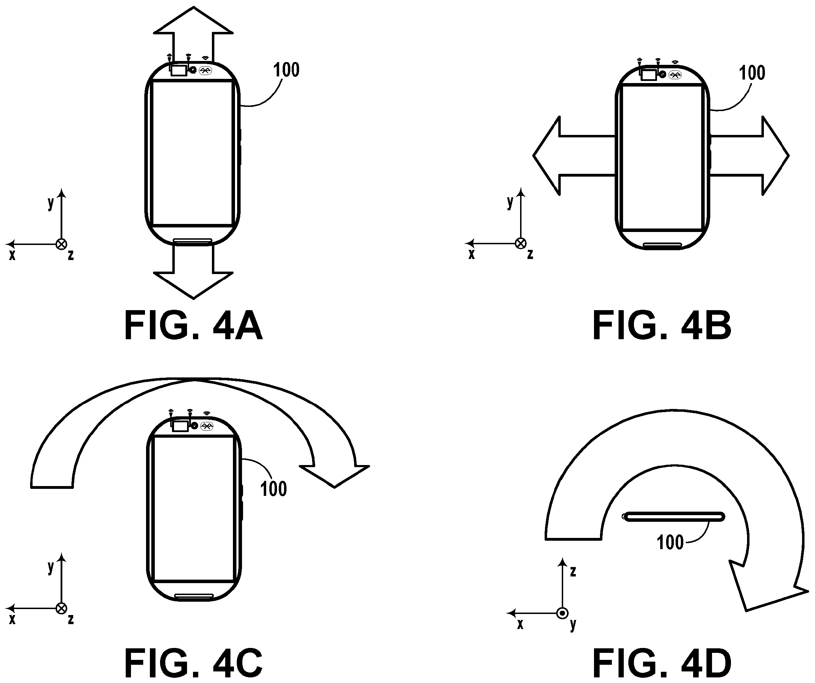

As described herein, a multitude of different gestures may be identified by the computing device 100 and/or the controlled device 310 (e.g., a directional swipe, an omnidirectional swipe, a shake, a rotation, a traced-out letter, a traced-out number, a traced-out shape, etc.). Figures 4A-4D provide illustrations of four sample gestures that may be performed using the computing device 100 and identified by the computing device 100 and/or the controlled device 100. Figure 4A may represent a vertical shake (e.g., moving the computing device 100 back-and-forth in the *y*-direction, as illustrated). Figure 4B may represent a horizontal shake (e.g., moving the computing device 100 back-and-forth in the *x-*direction, as illustrated). Figure 4C may represent a swipe (e.g., a horizontal swipe corresponding to rotating the computing device 100 about a yaw axis, such as the z-axis, as illustrated). Figure 4D may represent a rotation (e.g., a rotation of the computing device 100 about a roll axis, such as the *y*-axis, as illustrated). It is understood that Figures 4A-4D are provided solely as examples and that other gestures are also possible and contemplated herein.

Figure 5 is a communication flow diagram of a communication protocol 500, according to example embodiments. As illustrated in Figure 5, the communication protocol 500 may be performed based on communications between a computing device (e.g., the computing device 100 shown and described with reference to Figures 1 and 3) and a controlled device (e.g., the controlled device 310 shown and described with reference to Figure 3). In particular, the communication protocol 500 may include communications between a first UWB transceiver 114 of the computing device 100, a first BLE transceiver 116 of the computing device 100, a second UWB transceiver 314 of the controlled device 310, and a second BLE transceiver 316 of the controlled device 310. Further, the communication protocol 500 illustrated in Figure 5 may be performed to identify one or more gestures performed by the computing device 100 and to transmit one or more commands to the controlled device 310.

At step 502, the communication protocol 500 may include the first BLE transceiver 116 of the computing device 100 broadcasting a BLE discovery signal. In some embodiments, broadcasting the BLE discovery signal may correspond to the first BLE transceiver 116 transmitting a first BLE signal to the second BLE transceiver 316 of the controlled device 310.

At step 504, the communication protocol 500 may include the second BLE transceiver 316 of the controlled device 310 responding to the BLE discovery signal. In some embodiments, the second BLE transceiver 316 may receive the broadcasted BLE discovery signal and then, based on the BLE discovery signal, transmit a second BLE signal to the first BLE transceiver 116 in response. The second BLE signal may be usable to discover the controlled device 310 (e.g., may provide information to the computing device 100 regarding communication with the second UWB transceiver 314).

At step 506, the communication protocol 500 may include the computing device 100 powering on the first UWB transceiver 114. The first UWB transceiver 114 may be powered on by the computing device 100, for example, in response to the computing device 100 determining that the controlled device 310 is available to be controlled based on the second BLE signal transmitted by the second BLE transceiver 316.

At step 508, the communication protocol 500 may include the first UWB transceiver 114 of the computing device 100 transmitting a first UWB signal to the second UWB transceiver 314 of the controlled device 310.

At step 510, the communication protocol 500 may include the second UWB transceiver 314 of the controlled device 310 transmitting a second UWB signal to the first UWB transceiver 114 of the computing device 100. The second UWB signal may be used to determine the orientation and/or position of the first UWB transceiver 114 relative to the second UWB transceiver 314.

At step 512, the communication protocol 500 may include the computing device 100 (e.g., a processor of the computing device 100 or a controller of the first UWB transceiver 114) determining an orientation and/or position of the first UWB transceiver 114 relative to the second UWB transceiver 314 based on the received second UWB signal transmitted at step 510.

At step 514, the communication protocol 500 may include the computing device 100 (e.g., a processor of the computing device 100) identifying a gesture based, at least in part, on the determined orientation and position of the first UWB transceiver 114 relative to the second UWB transceiver 314. The gesture may also be identified based on previous determined orientations and/or positions of the first UWB transceiver 114 relative to the second UWB transceiver 314 (e.g., based on changes of the orientation and position of the first UWB transceiver 114 relative to the second UWB transceiver 314 determined over time), as described herein.

At step 516, the communication protocol 500 may include the first UWB transceiver 114 of the computing device 100 transmitting a command UWB signal to the second UWB transceiver 314 of the controlled device 310. The command UWB signal may be based on the gesture identified at step 514 of the communication protocol 500.

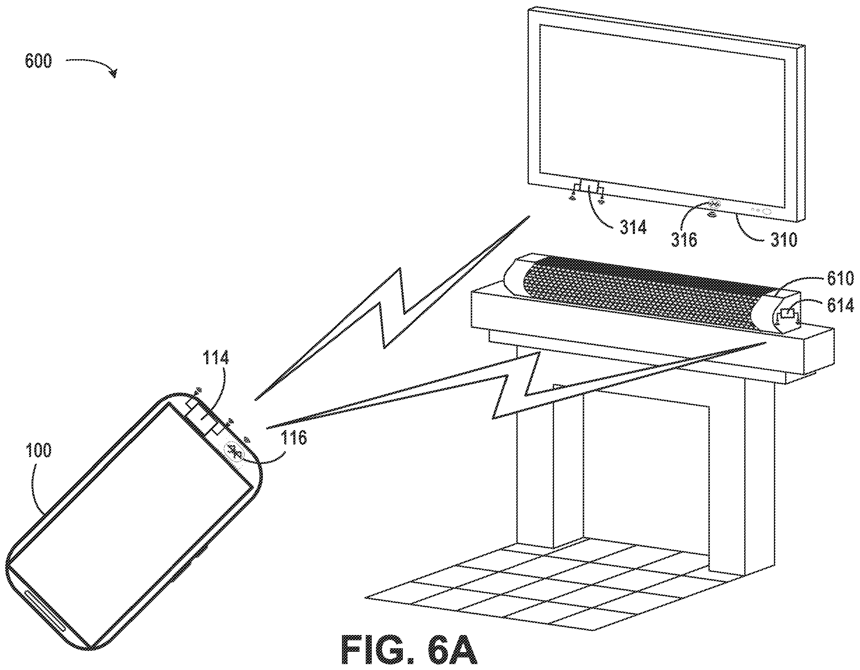

Figure 6A is an illustration of a system 600, according to example embodiments. Like the system 300 illustrated in Figure 3, the system 600 in Figure 6A may include a computing device (e.g., the computing device 100 shown and described with reference to Figure 1) and a controlled device 310. However, unlike the system 300 of Figure 3, the system 600 of Figure 6A may also include an additional controlled device 610. The additional controlled device 610 may include a third UWB transceiver 614. Though not illustrated in Figure 6A, in some embodiments, the additional controlled device 610 may include a third BLE transceiver. The third UWB transceiver 614 may be the same as the first UWB transceiver 114 and/or the second UWB transceiver 314, in some embodiments. Additionally or alternatively, the third UWB transceiver 614 may be different than the first UWB transceiver 114 and/or the second UWB transceiver 314 (e.g., may operate with a different bandwidth, different power, or have a different number of antennas). The additional controlled device 610 illustrated in Figure 6A is a speaker (e.g., a smart speaker). It is understood that other additional controlled devices are possible and contemplated herein. In some embodiments, the additional controlled device 610 may be connected to the controlled device 310 (e.g., to play sound corresponding to what is displayed on the television). Alternatively, operation of the additional controlled device 610 may be unrelated / unconnected to the controlled device 310.

In the system 600, UWB signals can be transmitted between the first UWB transceiver 114 and the second UWB transceiver 314 to determine one or more gestures traced out by the first UWB transceiver 114 and/or the computing device 100. Similarly, UWB signals can be transmitted between the first UWB transceiver 114 and the third UWB transceiver 614 to determine one or more gestures traced out by the first UWB transceiver 114 and/or the computing device 100. However, because the controlled device 310 and the additional controlled device 610 are in proximity to one another, it may be difficult to determine whether a gesture performed by the computing device 100 was intended to provide a command to the controlled device 310 or to the additional controlled device 610. Hence, when a gesture is identified by the computing device 100, a disambiguation technique may be employed to determine for which of the controlled devices 310, 610 a gesture was intended. Multiple disambiguation techniques are possible and contemplated herein.

In some embodiments, only certain types of gestures will correspond to certain types of controlled devices. For example, a swipe gesture may only be usable to provide commands to a television while a rotation gesture may only be usable to provide commands to a speaker. In the situation where a gesture is identified that could provide a command to different types of controlled devices present (e.g., a shake gesture corresponds to a command for a television and a command for a speaker) and/or when two instances of the same type of controlled device are present (e.g., two televisions are present close to one another), additional or alternative disambiguation techniques may be employed.

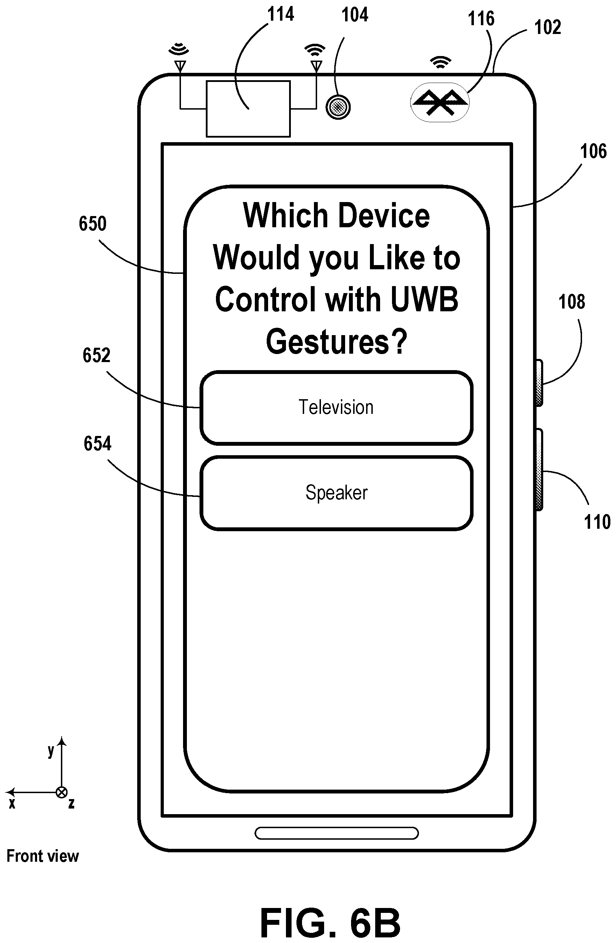

Figure 6B provides an additional or alternative disambiguation technique that could be used. As illustrated, a pop-up window 650 (e.g., within an application being executed by the computing device 100) may provide selection options to a user on the display 106. For example, a first option 652 corresponding to the controlled device 310 (e.g., in the system 600 of Figure 6A, this corresponds to a "television") and a second option 654 corresponding to the additional controlled device 610 (e.g., in the system 600 of Figure 6A, this corresponds to a "speaker"). As illustrated, the options 652, 654 may be represented in the pop-up window 650 as buttons. A button may be engaged (e.g., by a user interacting with a touchscreen) to provide an input to select for which of the controlled devices 310, 610 a previous and/or future gesture is intended. Based on the selection of the first option 652 or the second option 654, a gesture may be identified in a certain way based on the type of controlled device (e.g., a gesture approximately a swipe would otherwise have been identified, but since swipes do not apply to the type of controlled device selected, the computing device 100 reinterprets the swipe as a different type of gesture), a command associated with an identified gesture may be determined based on the type of controlled device, and/or a command UWB signal may be transmitted based on the type of controlled device (e.g., the command UWB signal may include a certain encryption such that only the intended recipient controlled device can interpret the command UWB signal).

In alternative embodiments, the selection among two or more controlled devices may be performed in other ways (e.g., other than selecting buttons on a pop-up window). For example, a setting in an application may be set, an email may be transmitted by the user, a text message may be transmitted by the user, etc.

In still other embodiments, disambiguation may be performed in other ways. For example, a memory of the computing device 100 may contain a list of priorities relating to possible controlled devices that could be communicated with by the computing device 100. In such embodiments, when two controlled devices 310, 610 are in proximity to one another, and a gesture is identified that could correspond to a command to be issued to either of the two controlled devices 310, 610, the computing device may disambiguate which device the gesture is intended for by determining which of the controlled devices 310, 610 has a higher priority. The computing device 100 may then determine a command based on the gesture based on the controlled device 310, 610 with the higher priority and transmit a command UWB signal to the controlled device 310, 610 with the higher priority based on the determined command. In some embodiments, a controlled device priority list may be set by a user of the computing device 100. Alternatively, the controlled device priority list may be based on device type (e.g., all televisions take priority over all speakers, which take priority over all thermostats, etc.).

As described above, the first UWB transceiver 114 and the second UWB transceiver 314 may be the same as one another or different from one another. As also described above, one of the differences that may exist between the devices is the number and/or position of the antennas within the respective transceivers. Illustrated in Figures 7A-7F are different antenna arrangements for the first UWB transceiver 114 and the second UWB transceiver 314. The first UWB transceiver 114 in Figure 7A may be configured to communicate with the second UWB transceiver 314 in Figure 7B, the first UWB transceiver 114 in Figure 7C may be configured to communicate with the second UWB transceiver 314 in Figure 7D, and the first UWB transceiver 114 in Figure 7E may be configured to communicate with the second UWB transceiver 314 in Figure 7F. It is understood that Figures 7A-7F are provided solely as an example and that other antenna arrangements are also possible and contemplated here. Further, in order to get orientation information based on the UWB signals, at least one of the two UWB transceivers 114, 314 may be equipped with two or more antennas.

Figure 7A illustrates an antenna arrangement for the first UWB transceiver 114 that includes three antennas. Figure 7B illustrates an antenna arrangement for the second UWB transceiver 314 that includes a single antenna. In some embodiments, the three antennas of the first UWB transceiver 114 may be used to triangulate position and/or orientation of the first UWB transceiver 114 relative to the second UWB transceiver 314 based on a single UWB signal transmitted by the second UWB transceiver 314.

Figure 7C illustrates an antenna arrangement for the first UWB transceiver 114 that includes two pairs of antennas: a first pair of antennas usable to determine the orientation of the first UWB transceiver 114 relative to the second UWB transceiver 314 in azimuth and a second pair of antennas usable to determine the orientation of the first UWB transceiver 114 relative to the second UWB transceiver 314 in elevation. Figure 7D illustrates an antenna arrangement for the second UWB transceiver 314 that includes a single antenna.

Figure 7E illustrates an antenna arrangement for the first UWB transceiver 114 that includes a single antenna. Figure 7F illustrates an antenna arrangement for the second UWB transceiver 314 that includes three antennas. In some embodiments, the three antennas of the second UWB transceiver 314 may be used to triangulate position and/or orientation of the first UWB transceiver 114 relative to the second UWB transceiver 314 based on a single UWB signal transmitted by the first UWB transceiver 114.

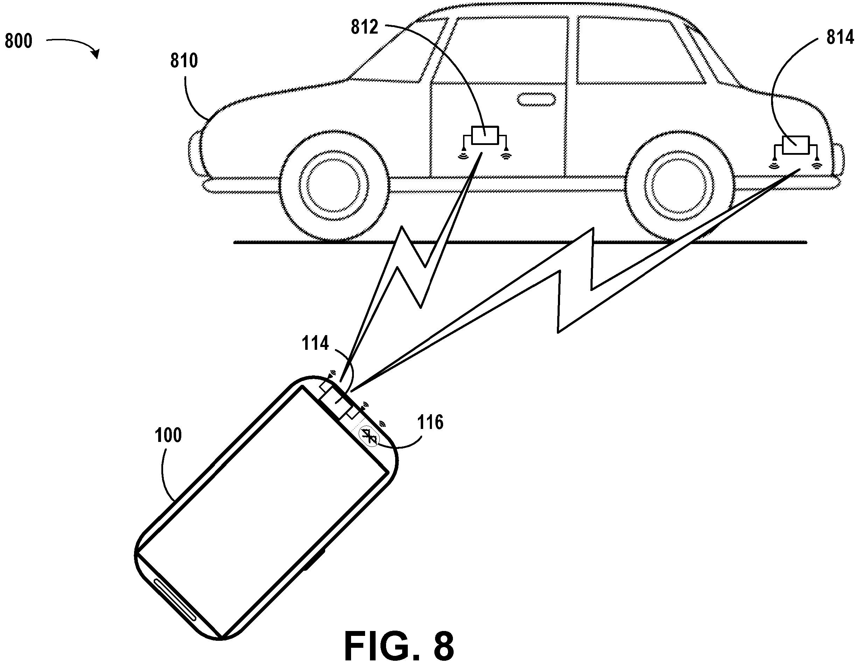

As described above, in some systems (e.g., the system 600 shown and described with reference to Figure 6A) there may be multiple controlled devices in proximity to one another. Additionally or alternatively, there could be a single controlled device that includes multiple UWB transceivers. For example, Figure 8 illustrates a system 800 that includes a computing device (e.g., the computing device 100 shown and described with reference to Figure 1) and a controlled device 810. As illustrated, the computing device 100 may include the first UWB transceiver 114 and the first BLE transceiver 116. Also as illustrated, the controlled device 810 may include a second UWB transceiver 812 and a third UWB transceiver 814. Because of the size of the controlled device 810, two UWB transceivers 812, 814 may be included such that two UWB transceivers 812, 814 are disposed at different locations of the controlled device 810 and such that different portions of the controlled device 810 can be controlled by the computing device 100. For example, the first UWB transceiver 114 may transmit and receive UWB signals from both the second UWB transceiver 812 and the third UWB transceiver 814 to determine an orientation and/or position of the first UWB transceiver 114 relative to the second UWB transceiver 812 and the third UWB transceiver 814, respectively. Such communications to determine the orientation and/or position of the first UWB transceiver 114 relative to the second UWB transceiver 812 and the third UWB transceiver 814 may be performed similarly to the techniques described above with reference to Figure 3, for example.

Also as described above, the computing device 100 (e.g., a processor of the computing device) may identify one or more gestures traced out by the computing device 100. Then, based on the one or more gestures, the first UWB transceiver 114 may transmit a command UWB signal to either the second UWB transceiver 812 or the third UWB transceiver 814. In some embodiments, transmitting a command UWB signal to one of the UWB transceivers 812, 814 may correspond to using a modulation scheme or other encoding scheme that is unique to the given UWB transceiver that the first UWB transceiver 114 is attempting to communicate with. Additionally or alternatively, transmitting a command UWB signal to one of the UWB transceivers 812, 814 may correspond to including a code or password in the command UWB signal that is unique to the given UWB transceiver that the first UWB transceiver 114 is attempting to communicate with.

Upon identifying the one or more gestures, the computing device 100 (e.g., a processor of the computing device 100) may determine whether to transmit a command UWB signal to the second UWB transceiver 812 or the third UWB transceiver 814 based on the distance between the first UWB transceiver 114 and the second UWB transceiver 812, based on the distance between the first UWB transceiver 114 and the third UWB transceiver 814, based on the orientation of the first UWB transceiver 114 relative to the second UWB transceiver 812, based on the orientation of the first UWB transceiver 114 relative to the third UWB transceiver 814, or based on the gesture performed (e.g., swipe, shake, rotation, etc.). In some embodiments, the position of the first UWB transceiver 114 relative to the second UWB transceiver 812 may be compared to the position of the first UWB transceiver 114 relative to the third UWB transceiver 814 to determine whether the first UWB transceiver 114 is closer to the second UWB transceiver 812 or the third UWB transceiver 814. Similarly, in some embodiments, the orientation of the first UWB transceiver 114 relative to the second UWB transceiver 812 may be compared to the orientation of the first UWB transceiver 114 relative to the third UWB transceiver 814 to determine whether the first UWB transceiver 114 is pointed towards the second UWB transceiver 812 or the third UWB transceiver 814.

As an example, if the computing device 100 is closer to the second UWB transceiver 812 than the third UWB transceiver 814 (e.g., closer to the car door than to the rear bumper of the car using the system 800 illustrated in Figure 8) and/or if the orientation of the computing device 100 / first UWB transceiver 114 is such that the computing device is pointed toward the second UWB transceiver 812 rather than the third UWB transceiver 814 when performing the gesture (e.g., the computing device 100 is pointed at the car door rather than the rear bumper of the car, using the system 800 illustrated in Figure 8, when performing the gesture), the first UWB transceiver 114 may transmit the command UWB signal to the second UWB transceiver 812 rather than the third UWB transceiver 814. The command UWB signal may indicate to the controlled device 810 to unlock a car door (e.g., as opposed to opening a trunk of the car). Additionally, disambiguation techniques (e.g., the disambiguation techniques shown and described with reference to Figure 6B) may be employed by the computing device 100 in order to determine to which UWB transceiver to transmit a command UWB signal if it is unclear whether a gesture traced out by the computing device 100 is intended for the second UWB transceiver 812 or the third UWB transceiver 814.

As indicated above, the command may equally be transmitted to the controlled device 810 over the other communication channels (e.g., WIFI, the public Internet, etc.). For example, based on the identified gesture, the computing device 100 may transmit an instruction to the controlled device 810 to unlock a car door over BLUETOOTH^{®} (e.g., in embodiments where the controlled device 810 includes a BLE transceiver). Further, while a car is used as an example controlled device 810 in the system 800 of Figure 8, it is understood that other types of controlled devices with multiple UWB transceivers are possible and are contemplated herein. Controlled devices may include multiple UWB transceivers when the controlled device is large (e.g., have a length dimension longer than the effective communication distance of UWB signals) or when the controlled device has different functionalities at different positions of the controlled device (e.g., a car door that can lock/unlock or roll down a window and a car trunk that can lock/unlock or open).

### III. Example Processes

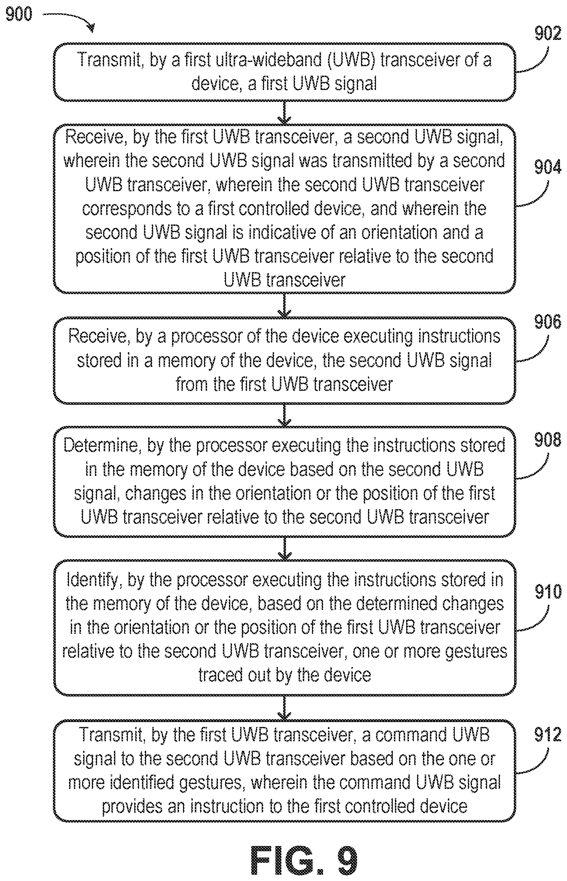

Figure 9 is a flowchart diagram of a method 900, according to example embodiments. In some embodiments, the method 900 may be performed by the computing device 100 shown and described with reference to Figure 1.

At block 902, the method 900 may include transmitting, by a first ultra-wideband (UWB) transceiver of a device, a first UWB signal.

At block 904, the method 900 may include receiving, by the first UWB transceiver, a second UWB signal, wherein the second UWB signal was transmitted by a second UWB transceiver, wherein the second UWB transceiver corresponds to a first controlled device, and wherein the second UWB signal is indicative of an orientation and a position of the first UWB transceiver relative to the second UWB transceiver.

At block 906, the method 900 may include receiving, by a processor of the device executing instructions stored in a memory of the device, the second UWB signal from the first UWB transceiver.

At block 908, the method 900 may include determining, by the processor executing the instructions stored in the memory of the device based on the second UWB signal, changes in the orientation or the position of the first UWB transceiver relative to the second UWB transceiver.

At block 910, the method 900 may include identifying, by the processor executing the instructions stored in the memory of the device, based on the determined changes in the orientation or the position of the first UWB transceiver relative to the second UWB transceiver, one or more gestures traced out by the device.

At block 912, the method 900 may include transmitting, by the first UWB transceiver, a command UWB signal to the second UWB transceiver based on the one or more identified gestures, wherein the command UWB signal provides an instruction to the first controlled device.

In some embodiments, the method 900 may also include transmitting, by a first BLE transceiver of the device, a first BLE signal. In addition, the method 900 may include receiving, by the first BLE transceiver, a second BLE signal, wherein the second BLE signal was transmitted by a second BLE transceiver, wherein the second BLE transceiver corresponds to the first controlled device, and wherein the second BLE signal is usable to discover the first controlled device. Further, the method 900 may include receiving, by the processor executing the instructions stored in the memory of the device, the second BLE signal from the first BLE transceiver. Additionally, the method 900 may include causing, by the processor executing the instructions stored in the memory of the device based on the received second BLE signal, the first UWB transceiver of the device to transmit the first UWB signal.

### IV. Conclusion

The present disclosure is not to be limited in terms of the particular embodiments described in this application, which are intended as illustrations of various aspects. Many modifications and variations can be made, as will be apparent to those skilled in the art. Functionally equivalent methods and apparatuses, in addition to those enumerated herein, will be apparent to those skilled in the art from the foregoing descriptions.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the claims. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, operation, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step, block, or operation that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer-readable medium such as a storage device including RAM, a disk drive, a solid state drive, or another storage medium.

Moreover, a step, block, or operation that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A device (100) comprising:
a first ultra-wideband, UWB, transceiver (114) configured to transmit and receive UWB signals to communicate with a second UWB transceiver (314), wherein the UWB signals are indicative of an orientation and a position of the first UWB transceiver relative to the second UWB transceiver, and wherein the second UWB transceiver corresponds to a first controlled device (310);
a memory (212), wherein the memory comprises instructions; and
a processor (206) communicatively coupled to the first UWB transceiver and the memory, **characterized in that** the processor is configured to execute the instructions to:
determine changes in the orientation or the position of the first UWB transceiver relative to the second UWB transceiver over time based on the UWB signals;
identify, based on the determined changes in the orientation or the position of the first UWB transceiver relative to the second UWB transceiver, one or more gestures traced out by the device; and
cause the first UWB transceiver to transmit either a) a command UWB signal to the second UWB transceiver corresponding to the one or more identified gestures, wherein the command UWB signal provides an instruction to the first controlled device, or b) the one or more identified gestures to the first controlled device using one or more gesture UWB signals.

2. The device of claim 1, wherein the processor is configured to execute the instructions to identify the one or more gestures traced out by the device by analyzing the determined changes in the orientation or the position of the first UWB transceiver relative to the second UWB transceiver using a machine-learned model, and wherein the machine-learned model was trained using labelled training data corresponding to a plurality of predefined gestures.

3. The device of claim 1 or 2, wherein the processor is configured to execute the instructions to identify the one or more gestures traced out by the device by comparing the determined changes in the orientation or the position of the first UWB transceiver relative to the second UWB transceiver to orientation and position data of one or more stored gestures, and wherein the one or more stored gestures correspond to gestures previously traced out by a user of the device.

4. The device of any of claims 1-3, wherein the one or more gestures comprise a directional swipe, an omnidirectional swipe, a shake, a rotation, a traced-out letter, a traced-out number, or a traced-out shape.

5. The device of any of claims 1-4, further comprising an inertial measurement unit configured to measure changes in angular orientation of the device, wherein the processor is communicatively coupled to the inertial measurement unit, wherein the processor is configured to execute the instructions to determine changes in the angular orientation of the device over time based on the changes in angular orientation measured by the inertial measurement unit, and wherein the one or more gestures traced out by the device are identified based on the determined changes in the orientation or the position of the first UWB transceiver relative to the second UWB transceiver and on the determined changes in the angular orientation of the device.

6. The device of any of claims 1-5, wherein the device is a watch, a wristband, a mobile phone, a tablet, or a remote control, and/or wherein the first controlled device comprises a speaker, a television, a thermostat, a smart-home hub, a desktop computer, a tablet, a kitchen appliance, a washer, or a dryer, and/or wherein a bandwidth of the UWB signals is between 475 MHz and 525 MHz.

7. The device of any of claims 1-6,
wherein the first UWB transceiver is also configured to transmit and receive UWB signals to communicate with a third UWB transceiver,
wherein the UWB signals communicated between the first UWB transceiver and the third UWB transceiver are indicative of an orientation and a position of the first UWB transceiver relative to the third UWB transceiver,
wherein the third UWB transceiver corresponds to a second controlled device,
wherein the second controlled device is in proximity to the first controlled device, and
wherein the processor is further configured to execute the instructions to:
determine changes in the orientation or the position of the first UWB transceiver relative to the third UWB transceiver over time based on the UWB signals;
identify, based on the determined changes in the orientation or the position of the first UWB transceiver relative to the third UWB transceiver, one or more gestures traced out by the device;
identify whether the one or more gestures traced out by the device are intended for the first controlled device or the second controlled device; and
respond to determining that the one or more gestures traced out by the device are intended for the second controlled device by causing the first UWB transceiver to transmit a command UWB signal to the third UWB transceiver based on the one or more identified gestures, wherein the command UWB signal provides an instruction to the second controlled device.

8. The device of claim 7, further comprising a display (106), wherein the processor is configured to execute the instructions to identify whether the one or more gestures traced out by the device are intended for the first controlled device or the second controlled device by:
displaying, on the display, an indication that a selection between the first controlled device and the second controlled device is to be made; and
receiving, as an input, a selection of the first controlled device or the second controlled device.

9. The device of claim 7, wherein the memory further comprises a list of priorities relating to devices to be controlled by the device, and wherein the processor is configured to execute the instructions to identify whether the one or more gestures traced out by the device are intended for the first controlled device or the second controlled device by:
retrieving the list of priorities relating to devices to be controlled by the device; and
selecting, between the first controlled device and the second controlled device, a device with a higher priority on the list of priorities.

10. The device of any of claims 1-9, further comprising a first BLUETOOTH Low Energy, BLE, transceiver configured to communicate with a second BLE transceiver of the first controlled device to discover the first controlled device, wherein the processor is communicatively coupled to the first BLE transceiver, and wherein the processor is further configured to execute the instructions to power on the first UWB transceiver upon the first controlled device being discovered.

11. The device of any of claims 1-10, wherein the first UWB transceiver comprises three antennas and the second UWB transceiver comprises an antenna, or wherein the first UWB transceiver comprises an antenna, and wherein the second UWB transceiver comprises three antennas.

12. The device of any of claims 1-10, wherein the first UWB transceiver comprises a first pair of antennas and a second pair of antennas, wherein the second UWB transceiver comprises an antenna, wherein the first pair of antennas is configured to determine the orientation of the first UWB transceiver relative to the second UWB transceiver in azimuth, and wherein the second pair of antennas is configured to determine the orientation of the first UWB transceiver relative to the second UWB transceiver in elevation.

13. The device of claim 1,
wherein the first UWB transceiver is further configured to transmit and receive UWB signals to communicate with a third UWB transceiver,
wherein the UWB signals are indicative of an orientation and a position of the first UWB transceiver relative to the third UWB transceiver,
wherein the third UWB transceiver corresponds to the first controlled device,
wherein the second UWB transceiver and the third UWB transceiver are disposed at different locations within the first controlled device, and
wherein the processor is further configured to execute the instructions to:
determine changes in the orientation or the position of the first UWB transceiver relative to the third UWB transceiver over time based on the received UWB signals;
identify, based on the determined changes in the orientation or the position of the first UWB transceiver relative to the third UWB transceiver, the one or more gestures traced out by the device; and
cause the first UWB transceiver to transmit a command UWB signal to the third UWB transceiver based on the one or more gestures traced out by the device, wherein the command UWB signal is sent to the second UWB transceiver or the third UWB transceiver based on an intended command.

14. The device of claim 13, wherein the processor is configured to execute the instructions to determine the intended command by:
comparing the position of the first UWB transceiver relative to the second UWB transceiver to the position of the first UWB transceiver relative to the third UWB transceiver to determine whether the first UWB transceiver is closer to the second UWB transceiver or the third UWB transceiver; or
comparing the orientation of the first UWB transceiver relative to the second UWB transceiver to the orientation of the first UWB transceiver relative to the third UWB transceiver to determine whether the first UWB transceiver is pointed towards the second UWB transceiver or the third UWB transceiver.

15. A method comprising:
transmitting, by a first ultra-wideband, UWB, transceiver of a device, a first UWB signal;
receiving, by the first UWB transceiver, a second UWB signal, wherein the second UWB signal was transmitted by a second UWB transceiver, wherein the second UWB transceiver corresponds to a first controlled device, and wherein the second UWB signal is indicative of an orientation and a position of the first UWB transceiver relative to the second UWB transceiver;
**characterized by**:
determining, by the device, based on the second UWB signal, changes in the orientation or the position of the first UWB transceiver relative to the second UWB transceiver over time;
identifying, by the device, based on the determined changes in the orientation or the position of the first UWB transceiver relative to the second UWB transceiver, one or more gestures traced out by the device; and
transmitting, by the first UWB transceiver, either a) a command UWB signal to the second UWB transceiver corresponding to the one or more identified gestures, wherein the command UWB signal provides an instruction to the first controlled device, or b) the one or more identified gestures to the first controlled device using one or more gesture UWB signals.

## Patentansprüche

1. Vorrichtung (100), umfassend:
einen ersten Ultrabreitband(ultra-wideband - UWB)-Sender/Empfänger (114), der dazu konfiguriert ist, UWB-Signale zu senden und zu empfangen, um mit einem zweiten UWB-Sender/Empfänger (314) zu kommunizieren, wobei die UWB-Signale eine Ausrichtung und eine Position des ersten UWB-Sender/Empfängers relativ zu dem zweiten UWB-Sender/Empfänger angeben und wobei der zweite UWB-Sender/Empfänger einer ersten gesteuerten Vorrichtung (310) entspricht;
einen Speicher (212), wobei der Speicher Anweisungen umfasst; und
einen Prozessor (206), der kommunikativ an den ersten UWB-Sender/Empfänger und den Speicher gekoppelt ist, **dadurch gekennzeichnet, dass** der Prozessor dazu konfiguriert ist,
Anweisungen für Folgendes auszuführen:
Bestimmen von Änderungen der Ausrichtung oder der Position des ersten UWB-Sender/Empfängers relativ zu dem zweiten UWB-Sender/Empfänger im Zeitverlauf auf Grundlage der UWB-Signale;
Identifizieren einer oder mehrerer durch die Vorrichtung verfolgten Gesten auf Grundlage der bestimmten Änderungen der Ausrichtung oder der Position des ersten UWB-Sender/Empfängers relativ zu dem zweiten UWB-Sender/Empfänger; und
Veranlassen des ersten UWB-Sender/Empfängers, entweder a) ein UWB-Befehlssignal, das der einen oder den mehreren identifizierten Gesten entspricht, wobei das UWB-Befehlssignal eine Anweisung an die erste gesteuerte Vorrichtung bereitstellt, an den zweiten UWB-Sender/Empfänger oder b) die eine oder die mehreren identifizierten Gesten unter Verwendung eines oder mehrerer UWB-Gestensignale an die erste gesteuerte Vorrichtung zu senden.

2. Vorrichtung nach Anspruch 1, wobei der Prozessor dazu konfiguriert ist, die Anweisungen auszuführen, um die eine oder mehreren durch die Vorrichtung verfolgten Gesten zu identifizieren, indem er die bestimmten Änderungen der Ausrichtung oder der Position des ersten UWB-Sender/Empfängers relativ zu dem zweiten UWB-Sender/Empfänger unter Verwendung eines maschinell erlernten Modells analysiert, und wobei das maschinell erlernte Modell unter Verwendung von beschrifteten Trainingsdaten trainiert wurde, die einer Vielzahl von vordefinierten Gesten entsprechen.

3. Vorrichtung nach Anspruch 1 oder 2, wobei der Prozessor dazu konfiguriert ist, die Anweisungen auszuführen, um die eine oder mehreren durch die Vorrichtung verfolgten Gesten zu identifizieren, indem er die bestimmten Änderungen der Ausrichtung oder der Position des ersten UWB-Sender/Empfängers relativ zu dem zweiten UWB-Sender/Empfänger mit Ausrichtungs- und Positionsdaten einer oder mehrerer gespeicherten Gesten vergleicht, und wobei die eine oder mehreren gespeicherten Gesten Gesten entsprechen, die durch einen Benutzer der Vorrichtung zuvor verfolgt wurden.

4. Vorrichtung nach einem der Ansprüche 1-3, wobei die eine oder mehreren Gesten ein direktionales Wischen, ein omnidirektionales Wischen, ein Schütteln, eine Drehung, einen verfolgten Buchstaben, eine verfolgte Zahl oder eine verfolgte Form umfassen.

5. Vorrichtung nach einem der Ansprüche 1-4, ferner umfassend eine Trägheitsmesseinheit, die dazu konfiguriert ist, Änderungen der Winkelausrichtung der Vorrichtung zu messen, wobei der Prozessor kommunikativ an die Trägheitsmesseinheit gekoppelt ist, wobei der Prozessor dazu konfiguriert ist, die Anweisungen auszuführen, um Änderungen der Winkelausrichtung der Vorrichtung im Zeitverlauf auf Grundlage der durch die Trägheitsmesseinheit gemessenen Änderungen der Winkelausrichtung zu bestimmen, und wobei die eine oder mehreren durch die Vorrichtung verfolgten Gesten auf Grundlage der bestimmten Änderungen der Ausrichtung oder der Position des ersten UWB-Sender/Empfängers relativ zu dem zweiten UWB-Sender/Empfänger und der bestimmten Änderungen der Winkelausrichtung der Vorrichtung identifiziert werden.

6. Vorrichtung nach einem der Ansprüche 1-5, wobei es sich bei der Vorrichtung um eine Uhr, ein Armband, ein Mobiltelefon, ein Tablet oder eine Fernbedienung handelt und/oder wobei die erste gesteuerte Vorrichtung einen Lautsprecher, ein Fernsehgerät, einen Thermostat, einen Smart-Home-Hub, einen Desktop-Computer, ein Tablet, ein Küchengerät, eine Waschmaschine oder einen Trockner umfasst und/oder wobei eine Bandbreite der UWB-Signale zwischen 475 MHz und 525 MHz liegt.

7. Vorrichtung nach einem der Ansprüche 1-6,
wobei der erste UWB-Sender/Empfänger zudem dazu konfiguriert ist, UWB-Signale zu senden und zu empfangen, um mit einem dritten UWB-Sender/Empfänger zu kommunizieren,
wobei die UWB-Signale, die zwischen dem ersten UWB-Sender/Empfänger und dem dritten UWB-Sender/Empfänger kommuniziert werden, eine Ausrichtung und eine Position des ersten UWB-Sender/Empfängers relativ zu dem dritten UWB-Sender/Empfänger angeben,
wobei der dritte UWB-Sender/Empfänger einer zweiten gesteuerten Vorrichtung entspricht,
wobei sich die zweite gesteuerte Vorrichtung in der Nähe der ersten gesteuerten Vorrichtung befindet und
wobei der Prozessor ferner dazu konfiguriert ist, die Anweisungen für Folgendes auszuführen:
Bestimmen von Änderungen der Ausrichtung oder der Position des ersten UWB-Sender/Empfängers relativ zu dem dritten UWB-Sender/Empfänger im Zeitverlauf auf Grundlage der UWB-Signale;
Identifizieren einer oder mehrerer durch die Vorrichtung verfolgten Gesten auf Grundlage der bestimmten Änderungen der Ausrichtung oder der Position des ersten UWB-Sender/Empfängers relativ zu dem dritten UWB-Sender/Empfänger;
Identifizieren, ob die eine oder mehreren durch die Vorrichtung verfolgten Gesten für die erste gesteuerte Vorrichtung oder die zweite gesteuerte Vorrichtung bestimmt sind; und
Reagieren auf Bestimmen, dass die eine oder mehreren durch die Vorrichtung verfolgten Gesten für die zweite gesteuerte Vorrichtung bestimmt sind, durch Veranlassen des ersten UWB-Sender/Empfängers, ein UWB-Befehlssignal auf Grundlage der einen oder mehreren identifizierten Gesten an den dritten UWB-Sender/Empfänger zu senden, wobei das UWB-Befehlssignal eine Anweisung an die zweite gesteuerte Vorrichtung bereitstellt.

8. Vorrichtung nach Anspruch 7, ferner umfassend eine Anzeige (106), wobei der Prozessor dazu konfiguriert ist, die Anweisungen auszuführen, um zu identifizieren, ob die eine oder mehreren durch die Vorrichtung verfolgten Gesten für die erste gesteuerte Vorrichtung oder die zweite gesteuerte Vorrichtung bestimmt sind, indem:
eine Angabe auf der Anzeige dargestellt wird, dass eine Auswahl zwischen der ersten gesteuerten Vorrichtung und der zweiten gesteuerten Vorrichtung vorzunehmen ist; und
eine Auswahl der ersten gesteuerten Vorrichtung oder der zweiten gesteuerten Vorrichtung als Eingabe empfangen wird.

9. Vorrichtung nach Anspruch 7, wobei der Speicher ferner eine Liste von Prioritäten betreffend durch die Vorrichtung zu steuernde Vorrichtungen umfasst und wobei der Prozessor dazu konfiguriert ist, die Anweisungen auszuführen, um zu identifizieren, ob die eine oder mehreren durch die Vorrichtung verfolgten Gesten für die erste gesteuerte Vorrichtung oder die zweite gesteuerte Vorrichtung bestimmt sind, indem:
die Liste von Prioritäten betreffend die durch die Vorrichtung zu steuernden Vorrichtungen abgerufen wird; und
zwischen der ersten gesteuerten Vorrichtung und der zweiten gesteuerten Vorrichtung eine Vorrichtung mit einer höheren Priorität in der Liste von Prioritäten ausgewählt wird.

10. Vorrichtung nach einem der Ansprüche 1-9, ferner umfassend einen ersten BLUETOOTH-Low-Energy(BLE)-Sender/Empfänger, der dazu konfiguriert ist, mit einem zweiten BLE-Sender/Empfänger der ersten gesteuerten Vorrichtung zu kommunizieren, um die erste gesteuerte Vorrichtung zu entdecken, wobei der Prozessor kommunikativ an den ersten BLE-Sender/Empfänger gekoppelt ist und wobei der Prozessor ferner dazu konfiguriert ist, die Anweisungen auszuführen, um den ersten UWB-Sender/Empfänger einzuschalten, wenn die erste gesteuerte Vorrichtung entdeckt wird.

11. Vorrichtung nach einem der Ansprüche 1-10, wobei der erste UWB-Sender/Empfänger drei Antennen umfasst und der zweite UWB-Sender/Empfänger eine Antenne umfasst oder wobei der erste UWB-Sender/Empfänger eine Antenne umfasst und wobei der zweite UWB-Sender/Empfänger drei Antennen umfasst.

12. Vorrichtung nach einem der Ansprüche 1-10, wobei der erste UWB-Sender/Empfänger ein erstes Paar von Antennen und ein zweites Paar von Antennen umfasst, wobei der zweite UWB-Sender/Empfänger eine Antenne umfasst, wobei das erste Paar von Antennen dazu konfiguriert ist, die Ausrichtung des ersten UWB-Sender/Empfängers relativ zu dem zweiten UWB-Sender/Empfänger im Azimut zu bestimmen und wobei das zweite Paar von Antennen dazu konfiguriert ist, die Ausrichtung des ersten UWB-Sender/Empfängers relativ zu dem zweiten UWB-Sender/Empfänger in der Höhe zu bestimmen.

13. Vorrichtung nach Anspruch 1,
wobei der erste UWB-Sender/Empfänger ferner dazu konfiguriert ist, UWB-Signale zu senden und zu empfangen, um mit einem dritten UWB-Sender/Empfänger zu kommunizieren,
wobei die UWB-Signale eine Ausrichtung und eine Position des ersten UWB-Sender/Empfängers relativ zu dem dritten UWB-Sender/Empfänger angeben,
wobei der dritte UWB-Sender/Empfänger der ersten gesteuerten Vorrichtung entspricht,
wobei der zweite UWB-Sender/Empfänger und der dritte UWB-Sender/Empfänger an unterschiedlichen Stellen innerhalb der ersten gesteuerten Vorrichtung angeordnet sind und
wobei der Prozessor ferner dazu konfiguriert ist, die Anweisungen für Folgendes auszuführen:
Bestimmen von Änderungen der Ausrichtung oder der Position des ersten UWB-Sender/Empfängers relativ zu dem dritten UWB-Sender/Empfänger im Zeitverlauf auf Grundlage der empfangenen UWB-Signale;
Identifizieren der einen oder mehreren durch die Vorrichtung verfolgten Gesten auf Grundlage der bestimmten Änderungen der Ausrichtung oder der Position des ersten UWB-Sender/Empfängers relativ zu dem dritten UWB-Sender/Empfänger; und
Veranlassen des erstes UWB-Sender/Empfängers, ein UWB-Befehlssignal auf Grundlage der einen oder mehreren durch die Vorrichtung verfolgten Gesten an den dritten UWB-Sender/Empfänger zu senden, wobei das UWB-Befehlssignal auf Grundlage eines beabsichtigten Befehls an den zweiten UWB-Sender/Empfänger oder den dritten UWB-Sender/Empfänger übermittelt wird.

14. Vorrichtung nach Anspruch 13, wobei der Prozessor dazu konfiguriert ist, die Anweisungen auszuführen, um den beabsichtigten Befehl zu bestimmen, indem:
die Position des ersten UWB-Sender/Empfängers relativ zu dem zweiten UWB-Sender/Empfänger mit der Position des ersten UWB-Sender/Empfängers relativ zu dem dritten UWB-Sender/Empfänger verglichen wird, um zu bestimmen, ob der erste UWB-Sender/Empfänger näher an dem zweiten UWB-Sender/Empfänger oder an dem dritten UWB-Sender/Empfänger ist; oder
die Ausrichtung des ersten UWB-Sender/Empfängers relativ zu dem zweiten UWB-Sender/Empfänger mit der Ausrichtung des ersten UWB-Sender/Empfängers relativ zu dem dritten UWB-Sender/Empfänger verglichen wird, um zu bestimmen, ob der erste UWB-Sender/Empfänger in Richtung des zweiten UWB-Sender/Empfängers oder des dritten UWB-Sender/Empfängers zeigt.

15. Verfahren, umfassend:
Senden eines ersten UWB-Signals durch einen ersten Ultrabreitband(UWB)-Sender/Empfänger einer Vorrichtung;
Empfangen eines zweiten UWB-Signals durch den ersten UWB-Sender/Empfänger, wobei das zweite UWB-Signal durch einen zweiten UWB-Sender/Empfänger gesendet wurde, wobei der zweite UWB-Sender/Empfänger einer ersten gesteuerten Vorrichtung entspricht und wobei das zweite UWB-Signal eine Ausrichtung und eine Position des ersten UWB-Sender/Empfängers relativ zu dem zweiten UWB-Sender/Empfänger angibt;
**gekennzeichnet durch**:
Bestimmen von Änderungen der Ausrichtung oder der Position des ersten UWB-Sender/Empfängers relativ zu dem zweiten UWB-Sender/Empfänger im Zeitverlauf durch die Vorrichtung auf Grundlage des zweiten UWB-Signals;
Identifizieren einer oder mehrerer durch die Vorrichtung verfolgten Gesten auf Grundlage der bestimmten Änderungen der Ausrichtung oder der Position des ersten UWB-Sender/Empfängers relativ zu dem zweiten UWB-Sender/Empfänger durch die Vorrichtung; und
Senden entweder a) eines UWB-Befehlssignals, das der einen oder den mehreren identifizierten Gesten entspricht, wobei das UWB-Befehlssignal eine Anweisung an die erste gesteuerte Vorrichtung bereitstellt, an den zweiten UWB-Sender/Empfänger oder b) der einen oder mehreren identifizierten Gesten an die erste gesteuerte Vorrichtung unter Verwendung eines oder mehrerer UWB-Gestensignale durch den ersten UWB-Sender/Empfänger.

## Revendications

1. Dispositif (100) comprenant :
un premier émetteur-récepteur à bande ultra-large, UWB (114) configuré pour transmettre et recevoir des signaux UWB afin de communiquer avec un deuxième émetteur-récepteur UWB (314), dans lequel les signaux UWB indiquent une orientation et une position du premier émetteur-récepteur UWB par rapport au deuxième émetteur-récepteur UWB, et dans lequel le deuxième émetteur-récepteur UWB correspond à un premier dispositif commandé (310) ;
une mémoire (212), dans lequel la mémoire comprend des instructions ; et
un processeur (206) couplé en communication au premier émetteur-récepteur UWB et à la mémoire, **caractérisé en ce que** le processeur est configuré pour exécuter les instructions pour :
déterminer les changements dans l'orientation ou la position du premier émetteur-récepteur UWB par rapport au deuxième émetteur-récepteur UWB au fil du temps sur la base des signaux UWB ;
identifier, sur la base des changements déterminés dans l'orientation ou la position du premier émetteur-récepteur UWB par rapport au deuxième émetteur-récepteur UWB, un ou plusieurs gestes tracés par le dispositif ; et
amener le premier émetteur-récepteur UWB à transmettre soit a) un signal UWB de commande au deuxième émetteur-récepteur UWB correspondant aux un ou plusieurs gestes identifiés, dans lequel le signal UWB de commande fournit une instruction au premier dispositif commandé, soit b) les un ou plusieurs gestes identifiés au premier dispositif commandé à l'aide d'un ou de plusieurs signaux UWB de geste.

2. Dispositif selon la revendication 1, dans lequel le processeur est configuré pour exécuter les instructions pour identifier les un ou plusieurs gestes tracés par le dispositif en analysant les changements déterminés dans l'orientation ou la position du premier émetteur-récepteur UWB par rapport au deuxième émetteur-récepteur UWB à l'aide d'un modèle d'apprentissage machine, et dans lequel le modèle d'apprentissage machine a été entraîné à l'aide de données d'entraînement étiquetées correspondant à une pluralité de gestes prédéfinis.

3. Dispositif selon la revendication 1 ou 2, dans lequel le processeur est configuré pour exécuter les instructions afin d'identifier les un ou plusieurs gestes tracés par le dispositif en comparant les changements déterminés dans l'orientation ou la position du premier émetteur-récepteur UWB par rapport au deuxième émetteur-récepteur UWB aux données d'orientation et de position d'un ou de plusieurs gestes stockés, et dans lequel les un ou plusieurs gestes stockés correspondent aux gestes précédemment tracés par un utilisateur du dispositif.

4. Dispositif selon l'une quelconque des revendications 1 à 3, dans lequel les un ou plusieurs gestes comprennent un balayage directionnel, un balayage omnidirectionnel, un tremblement, une rotation, une lettre tracée, un numéro tracé ou une forme tracée.

5. Dispositif selon l'une quelconque des revendications 1 à 4, comprenant également une unité de mesure inertielle configurée pour mesurer les changements d'orientation angulaire du dispositif, dans lequel le processeur est couplé en communication à l'unité de mesure inertielle, dans lequel le processeur est configuré pour exécuter les instructions afin de déterminer les changements d'orientation angulaire du dispositif au fil du temps sur la base des changements d'orientation angulaire mesurés par l'unité de mesure inertielle, et dans lequel les un ou plusieurs gestes tracés par le dispositif sont identifiés sur la base des changements déterminés dans l'orientation ou la position du premier émetteur-récepteur UWB par rapport au deuxième émetteur-récepteur UWB et sur les changements déterminés dans l'orientation angulaire du dispositif.

6. Dispositif selon l'une quelconque des revendications 1 à 5, dans lequel le dispositif est une montre, un bracelet, un téléphone mobile, une tablette ou une télécommande, et/ou dans lequel le premier dispositif commandé comprend un haut-parleur, un téléviseur, un thermostat, un concentrateur de maison intelligente, un ordinateur de bureau, une tablette, un appareil de cuisine, une machine à laver ou un sèche-linge, et/ou dans lequel une bande passante des signaux UWB est comprise entre 475 MHz et 525 MHz.

7. Procédé selon l'une quelconque des revendications 1 à 6, dans lequel le premier émetteur-récepteur UWB est également configuré pour transmettre et recevoir des signaux UWB afin de communiquer avec un troisième émetteur-récepteur UWB,
dans lequel les signaux UWB communiqués entre le premier émetteur-récepteur UWB et le troisième émetteur-récepteur UWB indiquent une orientation et une position du premier émetteur-récepteur UWB par rapport au troisième émetteur-récepteur UWB, dans lequel le troisième émetteur-récepteur UWB correspond à un second dispositif commandé,
dans lequel le second dispositif commandé est à proximité du premier dispositif commandé, et
dans lequel le processeur est également configuré pour exécuter les instructions pour :
déterminer les changements dans l'orientation ou la position du premier émetteur-récepteur UWB par rapport au troisième émetteur-récepteur UWB au fil du temps sur la base des signaux UWB ;
identifier, sur la base des changements déterminés dans l'orientation ou la position du premier émetteur-récepteur UWB par rapport au troisième émetteur-récepteur UWB, un ou plusieurs gestes tracés par le dispositif ;
identifier si les un ou plusieurs gestes tracés par le dispositif sont destinés au premier dispositif commandé ou au second dispositif commandé ; et
répondre à la détermination que les un ou plusieurs gestes tracés par le dispositif sont destinés au second dispositif commandé en amenant le premier émetteur-récepteur UWB à transmettre un signal UWB de commande au troisième émetteur-récepteur UWB sur la base des un ou plusieurs gestes identifiés, dans lequel le signal UWB de commande fournit une instruction au second dispositif commandé.

8. Dispositif selon la revendication 7, comprenant également un écran (106), dans lequel le processeur est configuré pour exécuter les instructions afin d'identifier si les un ou plusieurs gestes tracés par le dispositif sont destinés au premier dispositif commandé ou au second dispositif commandé en :
affichant, sur l'écran, une indication qu'une sélection entre le premier dispositif commandé et le second dispositif commandé doit être effectuée ; et
recevant, en entrée, une sélection du premier dispositif commandé ou du second dispositif commandé.

9. Dispositif selon la revendication 7, dans lequel la mémoire comprend également une liste de priorités concernant des dispositifs devant être commandés par le dispositif, et dans lequel le processeur est configuré pour exécuter les instructions afin d'identifier si les un ou plusieurs gestes tracés par le dispositif sont destinés au premier dispositif commandé ou au second dispositif commandé en :
récupérant la liste de priorités concernant des dispositifs devant être commandés par le dispositif ; et
sélectionnant, entre le premier dispositif commandé et le second dispositif commandé, un dispositif ayant une priorité plus élevée sur la liste de priorités.

10. Dispositif selon l'une quelconque des revendications 1 à 9, comprenant également un premier émetteur-récepteur BLUETOOTH basse consommation, BLE, configuré pour communiquer avec un deuxième émetteur-récepteur BLE du premier dispositif commandé afin de découvrir le premier dispositif commandé, dans lequel le processeur est couplé en communication au premier émetteur-récepteur BLE, et dans lequel le processeur est également configuré pour exécuter les instructions afin de mettre sous tension le premier émetteur-récepteur UWB lors de la découverte du premier dispositif commandé.

11. Dispositif selon l'une quelconque des revendications 1 à 10, dans lequel le premier émetteur-récepteur UWB comprend trois antennes et le deuxième émetteur-récepteur UWB comprend une antenne, ou dans lequel le premier émetteur-récepteur UWB comprend une antenne, et dans lequel le deuxième émetteur-récepteur UWB comprend trois antennes.

12. Dispositif selon l'une quelconque des revendications 1 à 10, dans lequel le premier émetteur-récepteur UWB comprend une première paire d'antennes et une seconde paire d'antennes, dans lequel le deuxième émetteur-récepteur UWB comprend une antenne, dans lequel la première paire d'antennes est configurée pour déterminer l'orientation du premier émetteur-récepteur UWB par rapport au deuxième émetteur-récepteur UWB en azimut, et dans lequel la seconde paire d'antennes est configurée pour déterminer l'orientation du premier émetteur-récepteur UWB par rapport au deuxième émetteur-récepteur UWB en élévation.

13. Dispositif selon la revendication 1,
dans lequel le premier émetteur-récepteur UWB est également configuré pour transmettre et recevoir des signaux UWB afin de communiquer avec un troisième émetteur-récepteur UWB,
dans lequel les signaux UWB indiquent une orientation et une position du premier émetteur-récepteur UWB par rapport au troisième émetteur-récepteur UWB,
dans lequel le troisième émetteur-récepteur UWB correspond au premier dispositif commandé,
dans lequel le deuxième émetteur-récepteur UWB et le troisième émetteur-récepteur UWB sont disposés à des emplacements différents dans le premier dispositif commandé, et
dans lequel le processeur est également configuré pour exécuter les instructions pour :
déterminer des changements dans l'orientation ou la position du premier émetteur-récepteur UWB par rapport au troisième émetteur-récepteur UWB au fil du temps sur la base des signaux UWB reçus ;
identifier, sur la base des changements déterminés dans l'orientation ou la position du premier émetteur-récepteur UWB par rapport au troisième émetteur-récepteur UWB, les un ou plusieurs gestes tracés par le dispositif ; et
amener le premier émetteur-récepteur UWB à transmettre un signal UWB de commande au troisième émetteur-récepteur UWB sur la base des un ou plusieurs gestes tracés par le dispositif, dans lequel le signal UWB de commande est envoyé au deuxième émetteur-récepteur UWB ou au troisième émetteur-récepteur UWB sur la base d'une commande prévue.

14. Dispositif selon la revendication 13, dans lequel le processeur est configuré pour exécuter les instructions afin de déterminer la commande prévue en :
comparant la position du premier émetteur-récepteur UWB par rapport au deuxième émetteur-récepteur UWB à la position du premier émetteur-récepteur UWB par rapport au troisième émetteur-récepteur UWB afin de déterminer si le premier émetteur-récepteur UWB est plus proche du deuxième émetteur-récepteur UWB ou du troisième émetteur-récepteur UWB ; ou
comparant l'orientation du premier émetteur-récepteur UWB par rapport au deuxième émetteur-récepteur UWB à l'orientation du premier émetteur-récepteur UWB par rapport au troisième émetteur-récepteur UWB afin de déterminer si le premier émetteur-récepteur UWB est pointé vers le deuxième émetteur-récepteur UWB ou le troisième émetteur-récepteur UWB.

15. Procédé comprenant :
la transmission, par un premier émetteur-récepteur à bande ultra-large, UWB, d'un dispositif, d'un premier signal UWB ;
la réception, par le premier émetteur-récepteur UWB, d'un second signal UWB, dans lequel le second signal UWB a été transmis par le deuxième émetteur-récepteur UWB, dans lequel le deuxième émetteur-récepteur UWB correspond à un premier dispositif commandé, et dans lequel le second signal UWB indique une orientation et une position du premier émetteur-récepteur UWB par rapport au deuxième émetteur-récepteur UWB ;
**caractérisé par** :
la détermination, par le dispositif, sur la base du second signal UWB, de changements dans l'orientation ou la position du premier émetteur-récepteur UWB par rapport au deuxième émetteur-récepteur UWB au fil du temps ;
l'identification, par le dispositif, sur la base des changements déterminés dans l'orientation ou la position du premier émetteur-récepteur UWB par rapport au deuxième émetteur-récepteur UWB, d'un ou de plusieurs gestes tracés par le dispositif ; et
la transmission, par le premier émetteur-récepteur UWB, soit a) d'un signal UWB de commande au deuxième émetteur-récepteur UWB correspondant aux un ou plusieurs gestes identifiés, dans lequel le signal UWB de commande fournit une instruction au premier dispositif commandé, soit b) des un ou plusieurs gestes identifiés au premier dispositif commandé à l'aide d'un ou de plusieurs signaux UWB de geste.
